# FASCICULE DE BREVET EUROPEEN

(11) **EP 1 470 722 B1**
(45) Date de publication et mention de la délivrance du brevet: **08.01.2020**
(21) Numéro de dépôt: 03715011.7
(22) Date de dépôt: 15.01.2003
(51) Int. Cl.: H04N 21/254, H04N 21/433, H04N 21/63, H04N 21/835, H04N 21/845, H04N 21/2347, H04N 21/462

(54) **DISPOSITIF POUR LA DIFFUSION SECURISEE, L ACCES CONDITIONNEL , LA VISUALISATION CONTROLEE, LA COPIE PRIVEE ET LA GESTION DES DROITS DE CONTENUS AUDIOVISUELS DE TYPE MPEG-4**
VORRICHTUNG ZU SICHERER VERTEILUNG, BEDINGTEM ZUGRIFF, KONTROLLIERTER SICHTBARKEIT, PRIVATER KOPIE UND VERWALTUNG VOM MPEG-4 BERECHTIGUNGEN
DEVICE THAT IS USED FOR SECURE DIFFUSION, CONTROLLED DISPLAY, PRIVATE COPYING AND MANAGEMENT OF, AND CONDITIONAL ACCESS TO, MPEG-4-TYPE AUDIOVISUAL CONTENT RIGHTS

(30) Priorité: 31.01.2002 FR 0201164
(43) Date de publication de la demande: 27.10.2004
(73) Titulaire: NAGRA FRANCE SAS, 75015 Paris (FR)
(72) Inventeur: LECOMTE, Daniel, F-75116 Paris (FR)
(74) Mandataire: Ipside
(86) Numéro de dépôt international: PCT/FR2003/000124
(87) Numéro de publication internationale: WO 2003/065731

(56) Documents cités:
- EP-A- 0 920 209
- EP-A- 1 014 724
- WO-A-01/69354
- JP-A- 8 181 966
- JP-A- 8 331 543
- US-A- 6 104 860
- US-A1- 2001 028 725
- US-A1- 2001 033 660
- US-A1- 2001 053 222
- US-B1- 6 233 356
- RUMP N ET AL: "White Paper on the Secure Digital Music Initiative SDMI" SDMI, mars 1999 (1999-03), XP002176222 cité dans la demande
- BARNI M ET AL: "OBJECT WATERMARKING FOR MPEG-4 VIDEO STREAMS COPYRIGHT PROTECTION" PROCEEDINGS OF THE SPIE, SPIE, BELLINGHAM, VA, US, vol. 3971, 24 janvier 2000 (2000-01-24), pages 465-476, XP000974595
- GENE WEN ET AL: "A Format-Compliant Configurable Encryption Framework for Access Control of Multimedia", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M7213, 2 June 2001 (2001-06-02), XP030036330,

## Description

La présente invention concerne l'accès conditionnel, la diffusion sécurisée, le contrôle de l'enregistrement, de la copie privée et de la visualisation de données audiovisuelles et de programmes de télévision, ou plus généralement n'importe quel programme ou séquence multimédia utilisant un format de flux nominal de type MPEG-4, par des utilisateurs autorisés et propose un système sécurisé pour le traitement, l'accès, la diffusion, la livraison, l'enregistrement, la copie privée, la visualisation et la gestion des droits de programmes et de séquences vidéo ou multimédia interactifs.

Le problème général est de fournir un dispositif capable de transmettre de façon sécurisée un ensemble de films de haute qualité visuelle à un format de type MPEG-4 en direct vers un écran de télévision et/ou pour être enregistré sur le disque dur d'un boîtier reliant le réseau de télétransmission à un écran de type moniteur ou écran de télévision, tout en préservant la qualité audiovisuelle mais en évitant toute utilisation frauduleuse comme la possibilité de faire des copies pirates de films ou de programmes audiovisuels enregistrés sur le disque dur du boîtier décodeur.

L'invention permet également un contrôle total de l'utilisation des copies et des droits attachés aux œuvres ainsi distribuées.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio) ou via des réseaux DAB (Digital Audio Broadcasting). Par ailleurs, pour éviter le piratage des œuvres ainsi diffusées, ces dernières sont souvent cryptées par divers moyens bien connus de l'homme de l'art.

Toutefois, l'inconvénient principal de toutes les solutions actuelles (TiVo Inc., WO00165762) est qu'il faut transmettre non seulement les données cryptées vers les utilisateurs, mais également les clés de décryptage. La transmission des clés de décryptage pouvant se faire avant, en même temps ou après la transmission des programmes audiovisuels. Pour augmenter la sécurité et donc la protection des œuvres audiovisuelles contre une utilisation mal intentionnée, les clés de décryptage ainsi que les fonctions de décryptage des décodeurs audiovisuels peuvent comporter des moyens de sécurité améliorés comme des cartes à puces ou autres clés physiques qui peuvent en option, être mises à jour à distance.

Ainsi, les solutions actuelles appliquées à un boîtier décodeur avec possibilité d'enregistrement local de programmes audiovisuels sous forme numérique sur un support quelconque de type disque dur ou autre type de mémoire, offrent à un usager mal intentionné, la possibilité de faire des copies non autorisées des programmes ainsi enregistrés, puisqu'à un moment donné, cet usager possède avec son boîtier décodeur numérique, associé ou pas à des systèmes de cartes à puce, toutes les informations, programmes logiciels et données permettant le décryptage complet des programmes audiovisuels. En raison justement du fait qu'il possède toutes les données, l'usager mal intentionné aura la possibilité de faire des copies illégales sans que personne ne s'aperçoive de cette copie frauduleuse au moment où elle est faite.

Une solution consisterait donc à transmettre tout ou partie d'un programme audiovisuel numérique uniquement à la demande (services de vidéo à la demande) à travers un réseau de télécommunication large bande de type ADSL, câble ou satellite, sans autoriser l'enregistrement local des programmes audiovisuels. Le document WO0011871 (Open Entertainment) propose ainsi une solution de distribution de fichiers multimédia sur requête de l'utilisateur. Ici, l'inconvénient est tout autre et provient des performances de ces réseaux qui ne permettent pas de garantir des flux continus de quelques mégabits par seconde à chaque usager, comme exigé par les flux MPEG-4 qui nécessitent des bandes passantes de quelques centaines de kilobits à plusieurs mégabits par seconde.

Dans ces conditions, une solution consiste à séparer le flux en deux parties dont aucune ne serait utilisable seule. Dans cette optique plusieurs brevets ont été déposés. Ainsi, on connaît par le document WO9908428 (Gilles Maton) un procédé de traitement multi-applicatif d'un terminal actif localisable dans lequel on réalise au moins une liaison avec un programme identifiable dédié à l'exécution d'une application, ledit programme dictant ses conditions d' exploitation au terminal pour la mise à disposition des fonctions. Le terminal dialogue ponctuellement, par l'emploi d'une liaison, avec le centre de gestion pour la réalisation, si nécessaire, des entrées et sorties des capacités de ce dernier, le centre de gestion devenant esclave ou non du terminal au niveau de l'applicatif vis-à-vis du programme entrant. Cette invention concerne également le procédé d'identification du programme et du terminal en exploitation. Ce procédé de l'art antérieur divise le flux en une partie servant à identifier l'utilisateur et une partie qui contient le programme à proprement parler. En particulier, ledit programme n'est pas inutilisable mais seulement verrouillé par la première partie.

D'autre part, le document EP0778513 (Matsushita) décrit un procédé permettant de prévenir l'utilisation illégale d'une information en y ajoutant une information de contrôle afin de vérifier les droits de l'utilisateur. Le système permet de savoir en permanence quelle partie de l'information est utilisée et par quel utilisateur et par là de savoir si cet utilisateur est en position illégale ou pas. Ce procédé sécurise donc les données en y ajoutant des informations additionnelles qui dénaturent l'information initiale.

Le document WO0049483 (Netquartz) nous offre également des procédés et des systèmes pour créer un lien entre les utilisateurs et un éditeur d'entités numérisées.

Le procédé comprend l'une au moins des étapes suivantes: l'étape de subdiviser ladite entité numérisée en deux l'étape de mémoriser une partie dans une zone parties mémoire d'un serveur connecté à un réseau informatique; l'étape de transmettre l'autre partie à au moins un utilisateur disposant d'un équipement informatique ; l'étape de connecter ledit équipement informatique audit réseau informatique; l'étape d'établir un lien fonctionnel entre ladite première partie et ladite deuxième partie. Ces procédés et systèmes ne spécifient pas si la partie mémorisée sur le serveur peut être stockée par l'utilisateur ce qui permettrait à celui-ci de pirater ladite entité numérisée.

Enfin, dans cette approche, l'état de la technique le plus proche se retrouve dans les brevets d' HyperLOCK Technologies dont le plus pertinent est le document US5937164 Cette invention utilise la solution qui consiste à séparer le flux en deux parties dont la plus petite détient une information nécessaire à l'utilisation de la plus grande. Cependant, ce brevet n'est pas suffisant pour répondre au problème identifié. En effet, la suppression d'une partie du flux dénature le format du flux, et ne peut donc pas être reconnu comme un flux standard, exploitable avec des applications logicielles générales. Ce procédé de l'art antérieur nécessite à la fois un logiciel spécifique côté serveur, pour la séparation des deux parties, et un autre logiciel spécifique assurant non seulement la reconstruction du flux, mais également l'acquisition du flux principal et son exploitation selon un format propriétaire à la solution. Ce format propriétaire n'est pas le format initial du flux avant séparation en deux parties, dans cette solution connue.

Cette société a également déposé trois autres brevets : le document US5892825 reprend le brevet précédent mais dans un cadre moins large car les flux y sont toujours cryptés ; le document US6035329 repose sur le même principe, il concerne un procédé permettant la lecture d'un disque de type CD-ROM ou DVD-ROM conditionnellement à l'identification des droits par l'insertion d'une carte à puce sur laquelle les informations nécessaires à la lecture sont stockées. Ce procédé n'est encore pas suffisant pour notre problème car il ne garantit pas que le flux modifié soit du même format que le flux originel. Enfin, le document US6185306 concerne un procédé de transmission de données cryptées depuis un si te Web vers un ordinateur demandeur. Ce procédé permet cependant à l'utilisateur de disposer à un moment donné de tous les outils nécessaires pour copier les données.

L'art antérieur connaît également, par la demande de brevet américain US 6 233 356 (Haskell Barin Geoffry et al), une méthode de scalabilité des flux MPEG-4, c'est à dire la séparation des éléments d'un même flux vidéo MPEG-4 en plusieurs couches. La première couche dite couche de base est nécessaire pour lire le flux MPEG-4, et suffisante pour le lire mais avec une qualité moindre. Les autres couches permettent d'améliorer cette qualité mais ne seront transmises au décodeur que si le moyen de transmission le permet, c'est-à-dire qu'il est capable de transmettre, et la couche de base, et une ou plusieurs couches supplémentaires.

L'art antérieur connaît également, par la demande de brevet européen EP 0 920 209 (Thomson Multimedia), une méthode et un dispositif pour le brouillage de données vidéo numériques. Ce document concerne le changement dans les images I d'un flux MPEG-2 des coefficients DC et AC, en vue de protéger le flux. Les coefficients AC sont permutés entre eux dans le même bloc à l'aide d'une valeur d'échange qui sera contenue dans le flux une fois la transformation effectuée. Les coefficients DC seront remplacés par des coefficients de valeurs différentes choisis à l'aide d'une valeur de commande qui sera aussi stockée dans le flux.

L'art antérieur connaît également, par la demande de brevet PCT WO 01 69354 (Microsoft), un système qui protège un produit numérique (software ou contenu) en le décomposant en au moins deux flux. Le premier flux est transmis à l'équipement client par un moyen physique comme un CD-ROM ou un DVD. Le deuxième flux est transformé de façon à n'être exploitable que par le poste client concerné, puis est transmis par le même procédé ou alors par un réseau de télécommunication à ce poste client. Le poste recevant les 2 flux peut modifier le premier flux en fonction d'une clé transmise par le Serveur, afin que ce premier flux soit compatible avec le 2eme flux reçu, et ces deux flux sont recombinés ensemble afin de restituer un flux binaire en substance équivalent au flux d'origine, mais différent en terme de configuration, et adéquat pour le système client. Ainsi ce système assure que le flux à transmettre l'est au bon appareil Client, et qu'il n'est utilisable que sur celui-ci.

L'art antérieur connaît également, par la demande de brevet américain US 6 104 860 (Goto Koichi et al), un système de contrôle d'accès permettant l'enregistrement ou non de programmes de télévision en fonction de l'autorisation faite à l'utilisateur de ce procédé, et validé par une clé contenue dans une carte à puce. Le flux télévisuel transmis contient des informations supplémentaires analysées par le système et qui valide ou non l'autorisation d'enregistrement. Une fois enregistré, le flux peut être rejoué mais il est de nouveau soumis à l'autorisation de lecture via le contrôle d'accès.

L'art antérieur connaît aussi, par le document "White Paper on the Secure Digital Music Initiative SDMI" (RUMP N ET AL), un système qui consiste à rajouter de l'information dans un flux afin d'y ajouter des données concernant la propriété dudit flux.

L'art antérieur connaît aussi, par la demande EP0993142, un système de sécurisation de données par brouillage, séparation et transmission des données via un réseau large bande et un canal sécurisé.

Enfin, l'art antérieur connaît, par le document GENE WEN ET AL: "A Format-Compliant Configurable Encryption Framework for Access Control of Multimedia",ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M7213, 2 juin 2001 (2001-06-02), différents procédés de brouillage vidéo MPEG-4 avec conservation de la compatibilité de format.

Afin de corriger les différents défauts de l'art antérieur, l'invention concerne un procédé pour la distribution de séquences vidéos selon un format de flux nominal constitué de données représentant une succession de scènes audiovisuelles constituées d'objets audiovisuels hiérarchisés selon un script décrivant leurs relations spatiales et temporelles comprenant chacune au moins un plan I-VOP correspondant à un plan objet complet comme c'est le cas avec la norme MPEG-4.

Comme cela est bien connu par l'homme de l'art, la norme MPEG-4 introduit en effet des notions d'objets Vidéo (VO pour« Video Object »), par exemple un personnage ou une voiture qui passe. La norme MPEG-4 introduit également le plan d'objet vidéo (VOP) qui représente un objet Vidéo à un moment donné et la couche d'objet vidéo (VOL). Cette décomposition en objet facilite grandement l'interactivité, et il devient plus facile d'obtenir des informations sur un objet (le joueur ou la voiture qui passe).

Le principe de base de la compression MPEG-4 repose sur le contenu. Il faut alors séparer le fond des objets animés. La caractéristique de MPEG-4 est de bien séparer les objets et le fond d'une scène, pour ensuite en tirer des avantages pour la compression et les fonctionnalités supplémentaires que cela entraînera. Cela permet lors d'un panoramique par exemple de ne transmettre qu'une seule fois le fond complet et d'envoyer séparément les objets animés.

Une scène audiovisuelle codée MPEG-4, est décrite comme un ensemble d'éléments individualisés et indépendants. Elle contient des composants de base regroupés par type. Ces groupes correspondent aux branches d'un arbre de découpage où chaque feuille représente un élément simple de base. Ainsi, une scène audiovisuelle de type MPEG-4 doit être comprise comme la composition d'objets audiovisuels selon un script décrivant leurs relations spatiales et temporelles. Les fonctionnalités de MPEG-4 nécessitent un environnement de représentation ou une architecture qui utilise une structure de données différentes de MPEG-1 et MPEG-2, parce que des parties significatives de l'information visuelle doivent être accessibles pour l'interaction et la manipulation. Dans la suite du texte, le terme VOP (Video Object Plan) correspond à un composant vidéo de forme arbitraire. Le plan de définition VOP a pour tâche de définir les objets significatifs de la scène avec lesquels des interactions et des manipulations indépendantes seront possibles. Ceci signifie que ces objets sont représentés de façon à fournir un accès simple et de préférence indépendant des autres objets de la scène. Toutefois, les différents VOPs n'ont pas nécessairement les mêmes résolutions spatiales et temporelles.

De plus, pour augmenter les possibilités de manipulation, des hiérarchies de VOPs associés à différents degrés d'accessibilité sont également prises en compte.

Tout cela permet à l'utilisateur de pouvoir interagir avec les objets de la scène. Voici quelques manipulations possibles : Modification de la position spatiale d'un objet (VOP) dans la scène.

Application d'un facteur d'échelle spatiale à un objet de la scène.

Changement de la vitesse avec laquelle un objet se déplace dans la scène.

Ajout d'objets.

Suppression d'un objet de la scène.

Dans la norme MPEG-4, les informations relatives à la forme, au mouvement et à la texture des VOPs sont codées dans des couches VOL (Video Object Layer) séparées afin de permettre le décodage séparé des VOPs.

Avec MPEG-4, l'image rectangulaire n'est qu'un cas particulier de codage de multiples VOPs comme image de forme arbitraire.

Le MPEG-4 VM (MPEG-4 Video Verification Model) utilise un algorithme identique pour coder des informations relatives à la forme, le mouvement et la texture dans chaque couche. Cependant, l'information concernant la forme n'est pas transmise si la séquence à coder ne contient que des images standard de taille rectangulaire. Dans ce cas, l'algorithme de codage vidéo MPEG-4 à une structure similaire aux algorithmes MPEG-1 et MPEG-2. Cela convient à des applications qui requièrent une grande efficacité de codage sans nécessiter des fonctionnalités étendues basées sur le contenu.

L'algorithme de compression MPEG-4 VM est basé sur la technique hybride des DPCM/Transform déjà employée par les normes MPEG-1 et MPEG-2.

Le premier VOP est codé en mode I-VOP. Chacune des images suivantes est codée en utilisant la prédiction inter-image (P-VOP). Seules les données de la plus proche image précédemment codée sont utilisées pour la prédiction.

A cela s'ajoute le support des B-VOP. Le procédé de codage est le même que celui des standard MPEG-1 et MPEG-2.

En général, les images en entrée qui doivent être codées pour chaque couche VOP sont de forme arbitraire et la position et la forme des images varient dans le temps en respect d'une fenêtre de référence. MPEG-4 VM introduit alors le concept de fenêtre de référence VOP avec une grille de macrobloc adaptable à la forme. Toutes les couches VOL qui doivent être codées pour une séquence vidéo en entrée sont définies en référence à la fenêtre de référence dont la taille est constante.

L'information sur la forme d'une VOP est codée avant le codage des vecteurs de position basés sur la grille de macrobloc du VOP et est exploitable aussi bien pour l'encodage que pour le décodage. Dans les étapes suivantes du processus, seules les informations concernant le mouvement et la texture des blocs du macrobloc sont codées (ce qui comprend les macroblocs standard et les macroblocs de contour).

L'invention concerne selon son acception la plus générale un procédé pour la distribution de séquences vidéos selon un format de flux nominal destiné à décrire une pluralité de scènes audiovisuelles, chaque scène étant constituée d'une pluralité d'objets audiovisuels hiérarchisés et d'un descripteur de ladite hiérarchie et des relations spatiales et temporelles entre lesdits objets, chaque objet vidéo comprenant au moins un plan numérique complet I-VOP, ledit plan I-VOP est décomposé en blocs et en macroblocs dépendant les uns des autres par des coefficients de corrélation, caractérisé en ce que l'on procède, avant la transmission à l'équipement client, à une analyse du flux pour générer un premier flux modifié, présentant le même format que le flux nominal, ledit flux modifié résultant de la modification desdits coefficients de corrélation par des coefficients aléatoires de même nature et un deuxième flux d'un format quelconque, comportant les informations numériques aptes à permettre la reconstruction desdits coefficients modifiés, puis à transmettre le premier flux modifié par un réseau large bande séparément les deux flux ainsi générés depuis le serveur vers l'équipement destinataire, et à transmettre sur demande lors de la visualisation du flux nominal, le deuxième flux depuis le serveur vers l'équipement destinataire, et en ce que l'on calcule sur l'équipement destinataire une synthèse d'un flux au format nominal en fonction dudit premier flux et dudit deuxième flux. Avantageusement, ladite synthèse produit un flux rigoureusement identique au flux originel, c'est-à-dire que le procédé est sans perte.

Dans un mode de réalisation particulier de ce procédé, chaque objet vidéo comprend au moins un plan N-VOP les données représentant ledit plan étant calculées en fonction des différences entre ledit plan N-VOP et au moins un autre plan.

Avantageusement, ledit premier flux présente des plans N-VOP modifiés.

Selon un mode de mise en œuvre de ce procédé, les données d'au moins un plan N-VOP sont calculées par compensation de mouvement dudit plan N-VOP par rapport au plan N-VOP ou I-VOP précédent. Le plan N-VOP est alors appelé plan P-VOP (prédit).

Selon un autre mode de mise en œuvre de ce procédé, les données d'au moins un plan N-VOP sont calculées par compensation de mouvement dudit plan N-VOP par rapport aux plans P-VOP ou I-VOP précédent et suivant.

Le plan N-VOP est alors appelé plan B-VOP (bidirectionnel).

Avantageusement, le format de flux nominal est défini par la norme MPEG-4.

Dans un mode de réalisation de ce procédé, ledit premier flux présente des plans P-VOP modifiés.

Dans un autre mode de réalisation de ce procédé, ledit premier flux présente des plans B-VOP modifiés.

Avantageusement, ledit plan I-VOP est décomposé en blocs et en macroblocs dépendant les uns des autres par des coefficients de corrélation et ledit premier flux modifié présente des plans I-VOP modifiés par la substitution de certains coefficients de corrélation par des coefficients de même nature mais aléatoires, et que ledit deuxième flux comporte les coefficients de corrélation substitués et les informations numériques aptes à permettre la reconstruction desdits plans modifiés.

Avantageusement, ladite analyse décide des coefficients de corrélation à modifier en fonction de la taille voulue pour ledit deuxième flux et de la dégradation désirée pour ledit premier flux modifié; ces modifications peuvent être: remplacer des coefficients de corrélation d'un plan I-VOP par des coefficients de corrélation d'un autre plan I-VOP, intervertir deux coefficients de corrélation d'un même plan I-VOP, intervertir deux coefficients de corrélation de deux plans I-VOP du même flux, remplacer des coefficients de corrélation d'un plan Selon une mise en œuvre particulière de ce procédé, au moins un plan P-VOP est modifié de la même façon que les plans I-VOP.

Avantageusement, ladite analyse décide des plans I-VOP, P-VOP et B-VOP à modifier en fonction de la taille voulue pour ledit deuxième flux et du niveau de dégradation désiré pour ledit premier flux modifié; ces modifications peuvent être les modifications des coefficients de corrélation des plans I-VOP ou P-VOP, remplacer un plan P-VOP par un autre plan P-VOP d'un autre flux, intervertir deux plans P-VOP du même flux, intervertir un plan B-VOP et un plan P-VOP du même flux.

S'il y a des plans B-VOP et P-VOP, un plan N- VOP est nécessairement de type B-VOP ou de type P-VOP.

Dans une mise en œuvre particulière de ce procédé, la transmission dudit premier flux est réalisée à travers un support matériel distribué physiquement comme un CD-ROM, un DVD, un disque dur ou une carte à mémoire de type mémoire flash par exemple.

Dans une autre mise en œuvre de ce procédé, la transmission dudit premier flux est réalisée à travers un réseau large bande (câble, satellite, fibre optique, hertzien, DSL, DAB).

Selon la mise en œuvre de ce procédé, la transmission dudit deuxième flux est réalisée à travers un réseau câblé, à travers un réseau téléphonique commuté (RTC analogique ou numérique), à travers un réseau téléphonique mobile utilisant les normes GSM, GPRS ou UMTS, à travers un réseau BLR (boucle locale radio) ou à travers un réseau de type DSL.

Selon une variante particulière de ce procédé, la transmission dudit deuxième flux est réalisée à travers un réseau large bande de même type que le réseau utilisé par ledit premier flux, voire à travers le même réseau.

Selon une variante particulière de ce procédé, la transmission dudit deuxième flux est réalisée au moyen d'une carte mémoire de type mémoire flash ou au moyen d'une carte à puce.

Avantageusement, la transmission d'un des deux flux ou des deux flux est chiffrée.

Avantageusement, un des deux flux ou les deux flux est tatoué par des techniques classiques de watermarking.

Selon la mise en œuvre de ce procédé, les deux flux générés peuvent être destinés à un seul équipement, à un groupe d'équipement ou à tous les équipements.

Selon un mode de réalisation particulier, la reconstruction est conditionnée par une transaction.

La reconstruction peut également être autorisée pour une consultation d'une copie privée demandée par le client.

De manière générale, le fait que la reconstruction soit conditionnée à l'autorisation du portail permet à tout opérateur du service de gérer tous les droits attachés aux œuvres audiovisuelles.

De plus, l'invention concerne un équipement pour la fabrication d'un flux vidéo en vue de la mise en œuvre de ce procédé comportant au moins un serveur multimédia contenant les séquences vidéos originelles et caractérisé en ce qu'il comporte un dispositif d'analyse du flux vidéo provenant dudit serveur pour générer les deux flux.

Avantageusement, cet équipement comporte une mémoire pour l'enregistrement d'un marqueur «copie privée » indiquant pour chaque séquence les droits de chaque utilisateur copie privée pouvant être regardée un nombre illimité de fois, copie privée pouvant être regardée un nombre limité de fois et quel nombre, copie privée interdite.

En outre, l'invention concerne un équipement pour l'exploitation d'un flux vidéo en vue de la mise en œuvre de ce procédé comprenant un décodeur standard de flux, au moins une interface d'enregistrement (disque dur, mémoire type mémoire flash) destiné à stocker le contenu dudit premier flux et/ou un lecteur de disques (CD, DVD, etc.) et au moins une interface d'affichage (écran standard, écran sans fil, vidéoprojecteur) caractérisé en ce qu'il comporte un moyen pour la recomposition du flux originel à partir des deux flux.

Selon un mode de réalisation particulier, ledit moyen est une application logicielle installée sur l'équipement.

Selon un autre mode de réalisation, ledit moyen est un dispositif électronique fixe.

Selon un autre mode de réalisation, ledit moyen est un dispositif électronique portable (mobile) avec son écran incorporé.

Selon un mode de réalisation où l'équipement est installé sur un ordinateur, ledit moyen utilise une ressource spécifique au produit (carte) afin d'éviter la copie de l'information temporaire du deuxième flux sur un support permanent.

Avantageusement, ladite interface d'enregistrement stocke aussi un marqueur« copie privée» en relation avec ledit premier flux indiquant pour cette séquence les droits de l'utilisateur: copie privée pouvant être regardée un nombre illimité de fois, copie privée pouvant être regardée un nombre limité de fois et quel nombre, copie privée interdite.

Avantageusement, l'équipement comprend un lecteur de cartes à puce permettant d'identifier l'usager.

Avantageusement, l'équipement comprend un lecteur de cartes à puce, la carte à puce contenant les applications logicielles.

Avantageusement, l'équipement comprend un lecteur de cartes à puce, la carte à puce contenant les données dudit deuxième flux pour un contenu donné.

Une variante de mise en œuvre consiste à réaliser l'équipement« client» sous forme de deux moyens interconnectés par une liaison physique ou une liaison à distance (Bluethooth, AirPort, WIFI, infrarouge,-). Selon cette variante, l'équipement pour l'exploitation d'un flux vidéo comporte un premier moyen constitué par un ordinateur personnel équipement d'une interface de communication pour la réception d'un flux vidéo en provenance d'un réseau de communication ou d'un lecteur de support physique, et muni d'au moins un moyen d'enregistrement [disque dur] destiné à stocker le contenu dudit premier flux, et un second moyen constitué par un décodeur, comprenant une interface d'affichage, des moyens de communication avec ledit ordinateur principal pour recevoir ledit premier flux transmis par l'ordinateur et des moyens de communication pour recevoir ledit deuxième flux, ainsi qu'un moyen pour la recomposition du flux originel à partir des deux flux.

Selon un premier mode de réalisation, ledit moyen pour la recomposition du flux est une application logicielle installée sur ledit décodeur seulement.

Selon un deuxième mode de réalisation, ledit moyen pour la recomposition du flux est un dispositif électronique installé sur ledit décodeur seulement.

Enfin, l'invention concerne un système pour la transmission d'un flux vidéo caractérisé en ce qu'il comprend un équipement de production d'un flux vidéo, au moins un équipement d'exploitation d'un flux vidéo et au moins un réseau de communication entre l'équipement de production et le(s) équipement(s) d'exploitation.

La présente invention sera mieux comprise à la lecture de la description d'un exemple non limitatif de réalisation qui suit, se référant aux dessins annexés où :
la figure 1 décrit l'architecture d'ensemble d'un système pour la mise en œuvre du procédé selon l'invention.
la figure 2 représente un mode de réalisation particulier du système d'analyse et de synthèse de flux conforme à l'invention.
la figure 3 représente un mode de réalisation particulier du système de synthèse de flux conforme à l'invention.

L'invention concerne un flux de données d'un format nominal, notamment mais non exclusivement un flux de type MPEG-4. Le format du flux audiovisuel utilisé doit avoir les caractéristiques suivantes : ce format doit décomposer les données en trames [frame], chaque trame comprenant un plan I-VOP complet et au moins un plan P-VOP calculé en codant les différences (compensation de mouvement) entre ce plan et le plan I-VOP ou P-VOP précédent; Optionnellement, chaque trame comprend au moins un plan B-VOP calculé en codant les différences (compensation de mouvement) entre ce plan et les plans I- VOP et/ou P-VOP précédent et suivant.

L'invention concerne un flux de données d'un format nominal, notamment mais non exclusivement un flux de type MPEG-4. Le format du flux audiovisuel utilisé doit avoir les caractéristiques suivantes:
- ce format doit décomposer les données en trames [frame], chaque trame comprenant un plan I-VOP complet;
- chaque plan I-VOP contient des coefficients de corrélation entre les différents blocs et/ou macroblocs des plans I-VOP.

Dans la description qui suit, l'exemple concerne un flux MPEG-4 sans que cela ne constitue une limitation de la portée de la protection.

Le principe général d'un procédé de sécurisation d'un flux vidéo est exposé ci-après.

L'objectif est d'autoriser les services de vidéo à la demande et à la carte à travers tous ces réseaux de diffusion et l'enregistrement local dans le boîtier décodeur numérique de l'usager. La solution consiste à conserver en permanence à l'extérieur de l'habitation de l'usager, en fait dans le réseau de diffusion et de transmission, une partie du programme audiovisuel enregistré, cette partie étant primordiale pour visualiser ledit programme audiovisuel sur un écran de télévision ou de type moniteur, mais étant d'un volume très faible par rapport au volume total du programme audiovisuel numérique enregistré chez l'usager. La partie manquante sera transmise via le réseau de diffusion transmission au moment de la visualisation dudit programme audiovisuel numérique préenregistré chez l'usager.

La plus grande partie du flux audiovisuel sera donc transmise via un réseau de diffusion classique alors que la partie manquante sera envoyée à la demande via un réseau de télécommunication bande étroite comme les réseaux téléphoniques classiques ou les réseaux cellulaires de type GSM, GPRS ou UMTS ou en utilisant une petite partie d'un réseau de type DSL ou BLR, ou encore en utilisant un sous- ensemble de la bande passante partagée sur un réseau câblé.

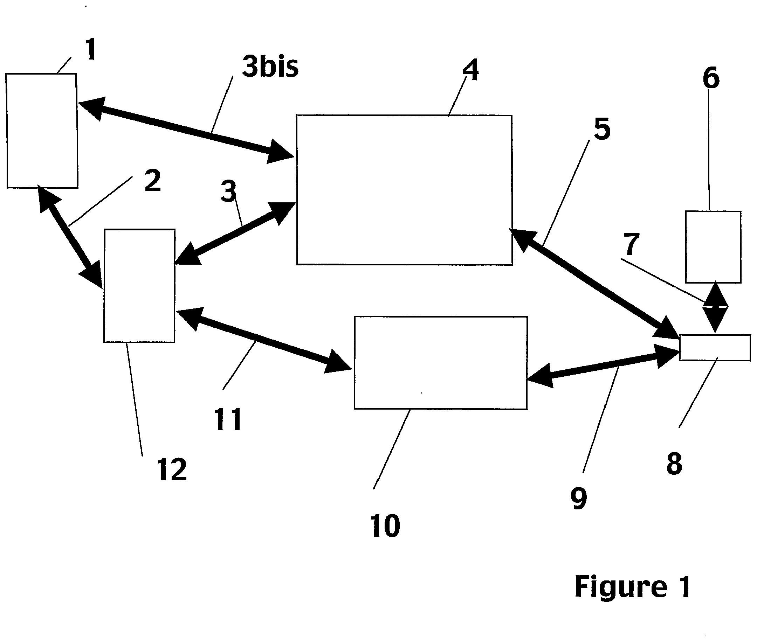

Sur le dessin en annexe, la figure 1 est un schéma de principe d'un système de distribution selon la présente invention.

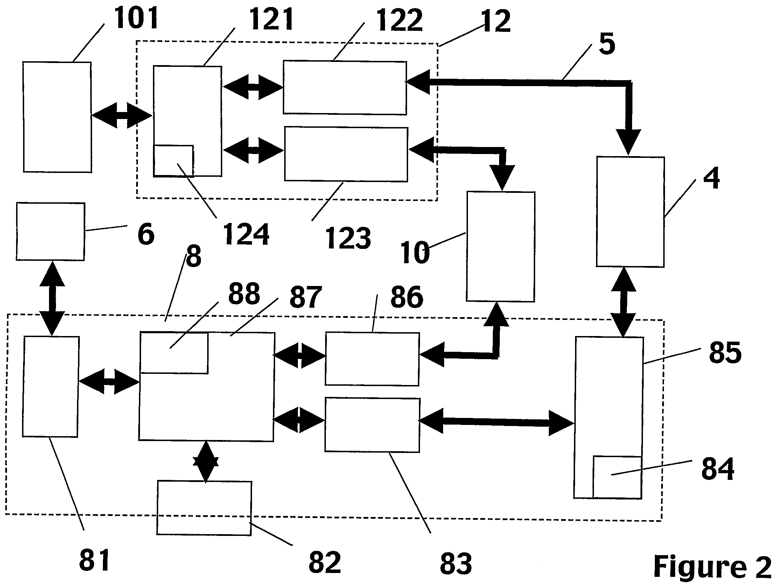

La figure 2 représente un mode de réalisation particulier du système d'analyse et de synthèse de flux conforme à l'invention.

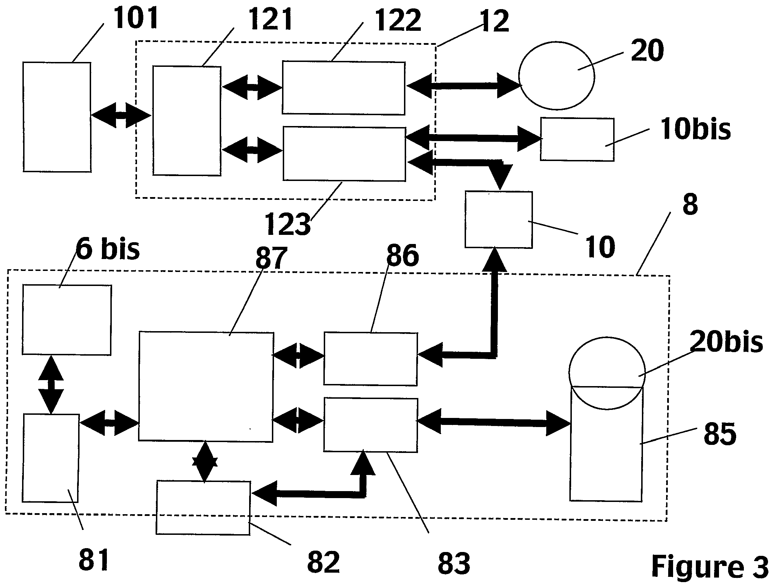

La figure 3 représente un mode de réalisation particulier du système de synthèse de flux conforme à l'invention.

Sur la figure 1, l'agencement d'interfaçage vidéo (8) est adapté pour relier au moins un dispositif d'affichage, par exemple un moniteur, un vidéo projecteur ou un dispositif de type écran de télévision (6), à au moins une interface de réseau de transmission et de diffusion large bande (4) et à au moins une interface de réseau de télécommunication (10). Selon la présente invention, cet agencement est composé d'un module (8) comprenant principalement, d'une part, une unité de traitement adaptée pour traiter, en particulier décoder et désembrouiller tout flux vidéo de type MPEG-4 selon un programme logiciel de décodage et désembrouillage pré- chargé, de manière à l'afficher, en temps réel ou différé, de le stocker, de l'enregistrer et/ou de l'envoyer sur un réseau de télécommunication et, d'autre part, au moins une interface d'écran (7) et une interface de connexion à un réseau local ou étendu (5) et/ou (9). Le réseau de transmission et de diffusion large bande (4) et le réseau de télécommunication (10) pouvant être confondus en un seul réseau.

Le disque dur du module (8) peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du portail (12).

Comme le montre la figure 1, l'interface de connexion (5) est reliée à un réseau de transmission et de diffusion large bande (4) telle qu'un modem, un modem satellite, un modem câblé, d'une interface de ligne à fibre optique ou d'une interface radio ou infrarouge pour la communication sans-fil.

C'est par cette liaison classique de diffusion vidéo que seront transmis les contenus des programmes audiovisuels comme des films. Toutefois, de façon à ne pas laisser faire de copies pirates, avant de transmettre le contenu audiovisuel depuis le serveur (1) ou le portail (12) il est prévu de conserver une petite partie du contenu audiovisuel dans le portail (12).

En cas de visualisation d'un programme audiovisuel en temps réel, cette petite partie du contenu audiovisuel conservée dans le portail (12) sera également envoyée au module (8) via le réseau de télécommunication (10).

Comme les plans successifs d'une séquence vidéo comportent un grand nombre d'éléments visuels identiques (comme en cinéma, une image ressemble à la précédente), MPEG-4 n'enregistre que les éléments qui diffèrent du plan d'origine. On modifiera donc un plan entier de référence en conservant les modifications apportées aux coefficients dans le portail (12) et, pour les plans successifs qui dépendent de ce plan I-VOP de référence, il n'est pas nécessaire d'apporter des modifications puisqu'ils feront diverger le flux visualisé en raison des perturbations apportées aux plans I-VOP de référence.

La compression MPEG-4 commence donc, dans un premier temps, par décomposer l'image en différentes matrices carrées comportant plusieurs points ou pixels, ayant chacun leur propre valeur calorimétrique. Un calcul permet d'obtenir une valeur moyenne pour chaque matrice au sein de laquelle chaque point est maintenant noyé. Ce traitement génère une pixélisation et l'apparition d'aplats uniformes, là où existaient des nuances de teinte. La deuxième étape de la compression MPEG-4 consiste à ne conserver d'un plan à l'autre que les éléments changeants.

Pour obtenir des images animées de type MPEG-4, le principe consiste à capter quelques images dans le temps, les images intermédiaires étant calculées à partir de celles-ci. L'analyse des plans de référence complets (dits I-VOP pour Intra) permet de prédire des plans intermédiaires P-VOP (Predicted). Ensuite, on intercale entre plans de référence et plans prédits, des plans B-VOP (Bidirectional).

La vidéo est représentée comme une succession de plans individuels, dont chacun est traité comme une matrice bidimensionnelle d'éléments d'image (pixels). La représentation des couleurs de chaque pixel comprend trois composantes : une composante de luminance Y et deux composantes de chrominance, Cb et Cr.

La compression de la vidéo numérisée est réalisée par l'utilisation de plusieurs techniques : sous échantillonnage d'informations de chrominance pour s'adapter à la sensibilité du système visuel humain (HVS), quantification, compensation du mouvement (MC) pour exploiter la redondance temporelle, transformation dans le domaine fréquentiel par la transformation en cosinus discrète (DCT) pour exploiter la redondance spatiale, codage à longueur variable (VLC) et interpolation d'images.

Le système visuel humain (HVS) étant le plus sensible à la résolution de la composante de luminance d'une image, les valeurs de pixel Y sont codées à pleine résolution. Le système visuel humain est moins sensible aux informations de chrominance. Le sous-échantillonnage élimine les valeurs de pixels basées systématiquement sur la position, ce qui réduit la quantité d'informations à comprimer par d'autres techniques. La norme conserve un ensemble de pixels de chrominance pour chaque voisinage 2x2 de pixels de luminance.

L'unité de codage de base d'une image est le macrobloc. Les macroblocs de chaque image sont codés successivement, de gauche à droite, et de haut en bas.

Chaque macrobloc est composé de 6 blocs 8x8: quatre blocs de luminance, un bloc de chrominance Cb et un bloc de chrominance Cr. A noter que les quatre blocs de luminance couvrent la même zone de l'image que chacun des blocs de chrominance, du fait du sous-échantillonnage des informations de chrominance, effectué pour adapter le codage à la sensibilité du système visuel humain.

Pour un macrobloc donné, la première opération est le choix du mode de codage qui dépend du type d'image, de l'efficacité de la prédiction compensée en mouvement dans la région codée, et de la nature du signal contenu dans le bloc. Deuxièmement, une prédiction compensée en mouvement du contenu du bloc, basée sur des images de référence antérieure ou future est formée. Cette prédiction est soustraite des données réelles du macrobloc courant, pour former un signal d'erreur. Troisièmement, ce signal d'erreur est divisé en 6 blocs 8x8 (4 blocs de luminance et 2 blocs de chrominance dans chaque macrobloc) à chacun desquels est appliquée une transformation en cosinus discrète. Le bloc 8x8 de coefficients DCT résultant est quantifié. Le bloc à deux dimensions qui en résulte est balayé en zigzag pour être converti en une chaîne unidimensionnelle de coefficients DCT quantifiés.

Quatrièmement, les informations annexes du macrobloc (type, vecteurs, etc.) ainsi que les données des coefficients quantifiés sont codées. Pour obtenir une efficacité maximale, un certain nombre de tables de codage à longueur variable sont définies pour les différents éléments de données. Un codage des longueurs de plage est appliqué aux données des coefficients quantifiés.

Le coefficient DCT du point (0, 0) supérieur gauche du bloc représente une fréquence horizontale et verticale nulle il est appelé coefficient DC (continu).

Le coefficient DC étant proportionnel à la valeur moyenne des pixels du bloc 8x8, le codage prédictif permet une compression supplémentaire, car la différence des valeurs moyennes des blocs 8x8 voisins tend à être relativement petite. Les autres coefficients représentes une ou plusieurs fréquences spatiales horizontales et/ou verticales non nulles et sont appelés coefficients AC. Pour que le niveau de quantification des coefficients correspondants aux fréquences spatiales élevées favorise la création d'un coefficient nul, on choisit un pas de quantification tel que le système visuel humain (VHS) ait peu de chance de percevoir la perte de la fréquence spatiale concernée, sauf si la valeur du coefficient se trouve au-dessus de ce niveau de quantification. Le codage statistique des plages prévues de coefficients d'ordre élevé consécutifs de valeur nulle, contribue considérablement au gain de compression. Pour regrouper les coefficients non nuls au début de la série et pour coder autant de coefficients nuls que possible à la suite du dernier coefficient non nul, leur séquence est donnée par un balayage en zigzag qui concentre les fréquences spatiales élevées à la fin des séries.

Le codage à longueur variable (VLC) est une technique de codage statistique qui affecte des mots de code aux valeurs à coder. Des mots de code courts sont affectés aux valeurs de fréquence d'occurrence élevée, et des mots de code longs à celles d'occurrence peu fréquente.

En moyenne, les mots de code courts plus fréquents sont majoritaires, en sorte que la chaîne codée est plus courte que les données d'origine.

L'invention consiste à utiliser la corrélation entre les coefficients DC et/ou AC dans un plan I-VOP, afin de pouvoir manipuler l'aspect et la validité visuelle de la séquence à laquelle appartient le plan I-VOP en question.

Dans la suite du texte, les manipulations apportées aux coefficients DC peuvent également être apportées aux coefficients AC sans qu'il soit besoin de la spécifier plus en détail.

En effet, étant donné que les plans I-VOP sont les porteurs principaux d'information dans une séquence MPEG-4, toute modification importante affectant ces plans I-VOP aura nécessairement un impact sur la validité de la séquence.

Ainsi, la possibilité d'obtenir des dégradations importantes des plans I-VOP sans effectuer de manipulations compliquées est offerte par la corrélation entre les coefficients DC dans ce plan I-VOP. Ces coefficients, étant fortement dépendants les uns des autres, déterminent dans une grande partie la valeur des coefficients de la même nature qui suivent. C'est ainsi que, en modifiant l'information qui y est contenue, on modifie profondément les plans I-VOP et par conséquent toute la séquence MPEG-4 qui suit ce plan I-VOP.

Chaque macrobloc d'un plan I-VOP contient six blocs, chacun d'entre eux commençant par un coefficient dc.

Quatre blocs correspondent à la luminance (Y), et deux à la chrominance (C) du macrobloc. La valeur écrite dans un fichier du flux MPEG-4 représentant un coefficient DC est en effet la différence entre la vraie valeur de ce coefficient et celle du coefficient correspondant qui précède et qui, pour les blocs Y, peut se trouver dans le même macrobloc ou dans le macrobloc précédent, tandis que pour les blocs Cil se trouve toujours dans le macrobloc précédent. Une modification de l'une de ces différences entraînera automatiquement une modification d'information dans tous les macroblocs qui suivent.

Lorsqu'il lit le train binaire, un décodeur classique MPEG-4 identifie le début d'un plan codé, puis le type du plan. Pour éviter toute confusion entre un boîtier décodeur standard souvent appelé« Set Top Box ou STB », le décodeur standard MPEG-4 sera appelé «Lecteur» (« Player » ou « Viewer ») dans la suite du document. Ce Lecteur peut être réalisé en hardware et/ou en software. Le lecteur MPEG-4 décode successivement chaque macrobloc du plan. Le plan est reconstruit quand tous ses macroblocs ont été traités. S'il s'agit d'un plan I-VOP, il constitue un plan de référence pour les plans subséquents et il est stocké à la place du plan de référence le plus ancien. Les plans sont ainsi disponibles, sous forme numérique, pour post-traitement et affichage, au gré de l'application.

Dans le cas d'un programme audiovisuel de type MPEG-4, toutes les caractéristiques des plans I-VOP en provenance du serveur (1) ou du portail (12) ne sont pas transmises vers le module (8). En particulier, les caractéristiques conformes à l'invention sont les coefficients de corrélation DC contenus dans les plans I-VOP.

Certains coefficients DC de ces plans I-VOP sont conservés dans le portail (12). Par contre, en lieu et place des coefficients DC de ces plans I-VOP non transmis, le dispositif conforme à l'invention intercalera de faux coefficients DC de même nature que les coefficients DC enlevés et conservés dans le portail (12) de sorte que le lecteur standard MPEG-4 du module (8) ne soit pas perturbé par ces modifications qu'il ignorera et reconstituera en sortie un flux de sortie MPEG-4 qui sera non correct du point de vue visuel pour un être humain mais correct du point de vue format MPEG-4.

Le lecteur MPEG-4 du boîtier (8) est un lecteur standard MPEG-4 et n'est en aucune manière modifié ou affecté par les changements apportés aux plans I-VOP.

De plus, dans le cas d'un programme audiovisuel de type MPEG-4, il est prévu de ne pas transmettre tous les plans B-VOP et/ou P-VOP en provenance du serveur (1) ou du portail (12) vers le module (8). Ces plans B-VOP et/ou P- VOP étant conservés dans le portail (12). Par contre, en lieu et place des plans B-VOP et/ou P-VOP non transmis, le dispositif conforme à l'invention intercalera de faux plans B-VOP et/ou P-VOP de même nature que les plans I-VOP et/ou P-VOP enlevés, substitués et conservés dans le portail (12) de sorte que le lecteur MPEG-4 du module (8) ne soit pas perturbé par ces modifications qu'il ignorera et reconstituera en sortie un flux de sortie MPEG-4 qui sera non correct du point de vue visuel pour un être humain mais correct du point de vue format MPEG-4.

Le lecteur MPEG-4 du boîtier (8) est un lecteur standard MPEG-4 et n'est en aucune manière modifié ou affecté par les changements apportés aux plans B-VOP et/ou P-VOP.

Selon un mode de réalisation particulier, pour augmenter l'efficacité du système de protection, il est préférable de ne pas envoyer les plans B-VOP et/ou P-VOP qui sont les plus proches et qui suivent des plans I-VOP du flux MPEG-4. Pour une efficacité encore plus grande, après analyse de leur volume et de leur poids en octets ou en bits, les plans B-VOP et/ou P-VOP seront choisis pour être non transmis et conservés dans le portail (12).

Selon un mode de réalisation particulier certains plans P-VOP et/ou B-VOP seront permutés entre eux.

Comme le montre la figure 1, l'interface de connexion (9) est reliée à un réseau de télécommunication étendu (10), directement ou par un réseau local servant de réseau d'accès et est constitué par exemple d'une interface de ligne d'abonné (Réseau téléphonique analogique ou numérique, DSL, BLR, GSM, GPRS, UMTS, etc).

Ainsi donc, les programmes audiovisuels sont diffusés de façon classique en mode multidiffusion (« broadcast ») via le réseau de transmission large bande (4) de type hertzien, câble, satellite, numérique hertzien, DSL, etc. depuis le serveur (1) directement via la liaison (3bis) ou via le portail (12) via la liaison (2) et (3) vers le module décodeur (8) à travers la liaison (5).

Chaque programme audiovisuel ainsi diffusé peut être crypté ou non, et, conformément à la présente invention, les flux de type MPEG-4 comportent des modifications au niveau de certains plans I-VOP comme décrit ci-dessus. En fonction des paramètres choisis par l'usager ou des informations transmises par le serveur de diffusion, certains programmes audiovisuels ainsi modifiés et incomplets sont enregistrés dans le disque dur du boîtier (8).

Lorsque l'usager désire visualiser un programme audiovisuel ainsi enregistré dans le disque dur de son boîtier (8) il en fait la demande de façon classique au moyen d'une télécommande relié à son boîtier (8) qui se connecte alors automatiquement au portail (12) via la liaison (9) de type réseau local ou accès direct et à travers le réseau de télécommunication (10) lui-même relié au portail (12) via la liaison (11). Tout au long de la visualisation du programme audiovisuel, les liaisons (9) et (11) restent établies et permettent au boîtier (8) de recevoir les fonctions et les paramètres de remise en ordre des coefficients DC modifiés des plans I-VOP. Les coefficients DC modifiés des plans I-VOP ainsi transmis ne sont jamais enregistrés dans le disque dur du boîtier (8) car les plans I-VOP reconstitués sont directement affichés sur l'écran de visualisation (6) via la liaison (7) après avoir été traités par le Lecteur du boîtier (8) à partir de sa mémoire locale volatile. Une fois traités et visualisés, les coefficients DC modifiés et/ou manquants des plans I- VOP venant d'être transmis par le portail (12) seront effacés de la mémoire volatile locale du boîtier (8).

Selon un mode de réalisation particulier les coefficients DC modifiés des plans I-VOP ainsi diffusés peuvent être cryptés ou non, par tout moyen de cryptage existant ou à venir. Il en est de même pour les algorithmes, les fonctions et les paramètres de remise en ordre des coefficients DC modifiés des plans I-VOP.

A chaque fois que l'usager voudra regarder un programme enregistré dans le disque dur du boîtier (8) le boîtier (8) se connectera automatiquement vers le portail (12). De même lorsque l'usager fera une pause, la transmission des coefficients DC modifiés des plans I-VOP en provenance du portail (12) sera interrompue jusqu'à la reprise de la visualisation, garantissant ainsi que toutes les informations d'un programme audiovisuel ne se retrouvent dans le boîtier (8) à un moment donné et évitant ainsi à une personne mal intentionnée de faire des copies pirates de ces enregistrements.

Selon un mode de réalisation particulier, le boîtier (8) comprend un lecteur de cartes à puce qui permettra au portail (12) d'authentifier l'usager propriétaire du boîtier (8).

Selon un mode de réalisation particulier, pour un contenu MPEG-4 donné, la carte à puce contient ledit deuxième flux qui a été mémorisé par le portail (12).

Si cela est autorisé, la carte à puce permet également à l'usager d'effectuer des copies privées des programmes audiovisuels enregistrés sur le disque dur de son boîtier décodeur (8). Pour cela, si l'usager veut faire une copie privée d'un programme audiovisuel, il le fera de façon classique sur un magnétoscope via la liaison (7) qui relie le boîtier (8) à l'écran de visualisation (6).

Toutefois, s'il désire conserver une copie privée dans le disque dur de son boîtier, il l'indiquera à son boîtier (8) qui enregistrera l'information « copie privée» ainsi que les coordonnées de l'usager se trouvant sur la carte à puce, dans un champ particulier (84) de ce programme audiovisuel enregistré sur le disque dur (85) du boîtier décodeur (8). Ensuite, chaque fois que l'usager voudra visionner cette copie privée, le boîtier (8) se connectera automatiquement au portail (12) et indiquera à ce dernier que l'usager veut faire une lecture de sa copie privée; en retour, si la lecture de la copie privée est possible pour cet usager qui possède cette carte à puce reliée à ce boîtier (8), le boîtier décodeur (8) recevra alors les coefficients DC modifiés et/ou manquants des plans I-VOP ainsi que toutes les autres informations permettant la visualisation du programme audiovisuel constituant la copie privée.

Selon un autre mode de réalisation, si l'usager désire conserver une copie privée dans le disque dur de son boîtier, il l'indiquera au serveur qui enregistrera l'information « copie privée » pour ce programme dans la mémoire copie privée (124) du portail (12) et pour cet utilisateur authentifié par la carte à puce. Ensuite, chaque fois que l'usager voudra visionner cette copie privée, le boîtier (8) se connectera automatiquement au portail (12) et indiquera à ce dernier que l'usager veut faire une lecture de sa copie privée en retour, si la lecture de la copie privée est possible pour cet usager qui possède cette carte à puce et pour ce programme, le boîtier décodeur (8) recevra alors les coefficients DC manquants des plans I-VOP ainsi que toutes les autres informations permettant la visualisation du programme audiovisuel constituant la copie privée.

Selon un mode de réalisation particulier, la copie dite privée pourra permettre à l'usager de regarder ce même programme audiovisuel de façon illimitée ou un nombre de fois déterminée à l'avance par l'offreur du service qui a autorisé cette copie privée.

La présente invention concerne également le boîtier physique (8) utilisé par le consommateur pour accéder aux données. Ce boîtier physique est si tué au domicile de l'utilisateur. Il fournit un ensemble de fonctionnalités qui gèrent l'information appropriée à présenter selon la sélection de l'audience et gère la connexion et la communication avec le serveur distant.

Selon un mode de réalisation particulier le boîtier physique correspondant à l'agencement d'interfaçage vidéo (8) est réalisé comme un dispositif autonome fixe avec disque dur intégré.

Selon un mode de réalisation particulier le boîtier physique correspondant à l'agencement d'interfaçage vidéo (8) est réalisé comme un dispositif autonome portable (mobile) avec disque dur intégré et/ou lecteur de disques (CD, DVD, etc.).

Selon un mode de réalisation particulier le boîtier physique autonome (8) comprend un lecteur de cartes à puce.

Selon un autre mode de réalisation particulier l'agencement d'interfaçage vidéo (8) est réalisé comme une carte additionnelle qui sera installée dans un ordinateur de type PC et sera reliée à au moins une interface de réseau de transmission et de diffusion large bande (4) et à au moins une interface de réseau de télécommunication (10).

Cette carte utilisera le disque dur de l'ordinateur PC pour l'enregistrement du premier flux, mais comportera son propre calculateur et sa propre mémoire volatile de façon à ne pas laisser à l'utilisateur du PC mal intentionné le moyen d'accéder aux informations complémentaires comme les coefficients DC modifiés des plans I-VOP du deuxième flux.

Selon la présente invention, les serveurs vidéo et multimédia (1) et/ou (12) comprennent des moyens de codage, de transcodage et de brouillage de données vidéo, en particulier des moyens d'ajouter des informations cryptographiques et de sécurité au début et tout au long des séquences.

Il est enfin à noter que l'invention dégrade le flux MPEG-4 du point de vue visuel jusqu'à ne plus permettre la reconnaissance des scènes transmises et affichées sans avoir accès aux données et caractéristiques complémentaires, mais reconstitue totalement le flux MPEG-4 dans l'agencement d' interfaçage vidéo (8) sans aucune perte.

Bien que la présente invention soit plus particulièrement axée sur les données audiovisuelles, il est entendu que toute information multimédia interactive et toutes données interactives peuvent être traitées par le présent agencement et le présent système, les données vidéo de type MPEG-4 étant les plus élaborées.

La présente invention sera mieux comprise grâce à la description suivante présentant la base physique de la présente invention et en référence à la figure 2 du dessin en annexe représentant un mode de réalisation préféré de cette dernière en tant qu'exemple non limitatif de réalisation particulièrement bien adaptée pour les réseaux câblés et de satellites. Le flux MPEG-4 (101) complet est analysé par le dispositif d'analyse (121) du portail (12) et sera ainsi séparé en un flux de type MPEG-4 mais dont les coefficients DC manquants des plans I-VOP auront été traités et qui sera envoyé via la sortie (122) du portail vers le réseau de diffusion transmission large bande (4).

L'autre partie du flux MPEG-4 modifié sera mémorisée dans la mémoire tampon (122) du portail (12).

Pour chaque flux MPEG-4 ainsi diffusé, le portail (12) conservera dans une mémoire tampon (122) les modifications qui auront été apportées à ce flux MPEG-4 par l'analyseur (121) du portail (12). Il est précisé que, pour un même flux d'entrée MPEG-4 (101) le traitement du flux peut être différent pour chaque utilisateur (8) et/ou pour chaque groupe d'utilisateurs (8). Ainsi, la mémoire tampon (123) du portail (12) comprend une zone de mémoire différente pour chaque utilisateur.

Dans les exemples réalisés, pour un premier utilisateur, les coefficients DC de certains plans I-VOP du flux MPEG-4 sont modifiés; pour un deuxième utilisateur, certains coefficients des plans I-VOP et certains plans P- VOP du flux MPEG-4 sont modifiés ; pour un troisième utilisateur, certains plans P-VOP et certains plans B-VOP du flux MPEG-4 sont substitués, modifiés et/ou échangés ; dans le quatrième exemple, le dispositif (8) est portable (mobile).

Décrivons maintenant en détail les différentes étapes pour ce premier utilisateur.

Le portail (121) a choisi le flux MPEG-4 (101) qu'il va devoir envoyer à l'utilisateur (8) pour être regardé en différé sur son écran de télévision (6). Cet utilisateur est relié à un réseau câblé numérique de diffusion (4) et à un réseau de télécommunication ADSL (10).

Le système d'analyse (121) du portail (12) va donc lire le flux entrant MPEG-4 (101) et, chaque fois qu'il détecte un plan I-VOP, il le décompose en macroblocs (aussi en tranches - slices), puis en blocs. Cette analyse lui permet de reconnaître dans le code les coefficients DC, et de substituer certains d'entre eux par des valeurs aléatoires, afin de rendre les plans (et par conséquent la séquence) illisibles du point de vue visuel humain. Les vraies valeurs des coefficients DC seront stockées dans le tampon de sortie (123), qui permettra plus tard la reconstitution de la séquence de départ dans le boîtier (8), en suivant le schéma inverse. Dans l'exemple réalisé, un macrobloc sur deux comporte un bloc (coefficient DC) modifié, tout en respectant l'égalité des fréquences de modification pour les six blocs d'un macrobloc.

Le système d'analyse (121) inscrit alors la valeur du coefficient substitué du plan I-VOP modifié dans le tampon (123). Le système d'analyse (121) continue son analyse jusqu'à la fin du flux d'entrée MPEG-4.

Le nouveau flux MPEG-4 modifié est alors enregistré dans le tampon de sortie (122) pour être diffusé sur le réseau de diffusion (4) à travers la liaison (5).

Les coefficients DC substitués des plans I-VOP modifiés du flux MPEG-4 entrant (101) sont mémorisés dans le tampon (123) du portail (12).

Pendant ce temps, et de façon totalement non synchronisée, le flux de sortie MPEG-4 modifié en provenance du tampon de sortie (122) du portail (12) est diffusé via le réseau large bande (4) vers un ou plusieurs utilisateurs (8).

Chaque boîtier décodeur autorisé (8) qui souhaite enregistrer ce flux MPEG-4 ainsi modifié peut alors lire ce flux MPEG-4 et l'enregistrer sur son disque dur (85). Cette initiative d'enregistrement est laissée au décodeur (8) sous le contrôle du portail (12). Pour cela, le système d'analyse (121) avait inscrit au début du flux MPEG-4, une information de données supplémentaires qui précisait les destinataires de ce flux MPEG-4 modifié. Les destinataires peuvent être ainsi un destinataire (8) particulier et lui seul, un groupe de destinataires (8) ou l'ensemble des décodeurs (8) reliés au réseau (4).

La phase décrite ci-dessus correspond à la première phase de préparation du flux MPEG-4 par le portail (12), à sa transmission via le réseau large bande (4) et à son enregistrement dans un décodeur (8). Ce décodeur peut alors afficher ce flux MPEG-4 enregistré dans son disque dur (85). Pour cela, le système de synthèse (87) du décodeur (8) va lire le fichier MPEG-4 depuis son disque dur (85) et va l'envoyer vers un lecteur classique MPEG-4 (81). Si aucune donnée complémentaire n'est reçue par le système de synthèse (87), alors le flux MPEG-4 qui parvient au lecteur (81) est traité et affiché tel quel, ce qui provoque une distorsion importante de l'affichage sur l'écran de visualisation (6). En effet, les plans I-VOP modifiés qui sont traités par le système de synthèse (87) ne correspondent pas aux plans I-VOP qui sont nécessaires pour une visualisation correcte, puisque certains coefficients de corrélation DC ont été substitués par des coefficients aléatoires. Par contre, comme le flux enregistré est bien un flux de type MPEG-4, le lecteur (81) ne fait aucune différence et affiche les informations sur l'écran de sortie (6) qui apparaissent bien comme des données d'un flux vidéo MPEG-4 mais totalement incohérentes à l'être humain qui regarde l'écran (6). Toute copie du flux MPEG-4 en provenance du disque dur (85) du boîtier (8) produira le même effet visuel lors de sa restitution par un lecteur MPEG-4 quelconque ; toute utilisation de cette copie qui serait mal intentionnée est donc vouée à l'échec.

Lorsque l'usager du décodeur (8) veut réellement visualiser sur son écran (6) le programme audiovisuel enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG-4 modifié en provenance du disque dur (85) via le tampon de lecture (83). Le système de synthèse (87) établit alors une liaison avec le portail (12) via le réseau de télécommunication (10) qui est dans notre exemple une liaison DSL. Une fois cette liaison établie, et pendant toute la durée de visualisation du film ou du programme audiovisuel, le système de synthèse (87) fait parvenir de la mémoire tampon (123) du serveur (12) les coefficients de corrélation substitués et les données correspondant aux plans I-VOP modifiés du flux enregistré sur le disque dur (85). Ces coefficients de corrélation et ces données de position parviennent au système de synthèse (8 7) via la mémoire tampon d'entrée (86) et sont stockées temporairement dans la mémoire volatile (88) du système de synthèse (87). A partir du flux MPEG-4 modifié qui parvient via le tampon (83), et à partir des coefficients de corrélation et des données associées qui parviennent via le tampon (86) dans la mémoire (88), le système de synthèse (87) reconstitue de façon inverse au processus d'analyse décrit précédemment les plans I-VOP modifiés par les plans I-VOP réels, et envoie le nouveau flux MPEG-4 ainsi reconstitué vers le lecteur (81) pour être affiché correctement sur l'écran (6). Dès leur utilisation, les coefficients de corrélation à substituer et les données associées à ces plans I-VOP sont effacés de la mémoire volatile (88).

Dans l'exemple réalisé, avant que le portail (12) n'autorise l'envoi des plans I-VOP et des données associées depuis son tampon (123), le portail (12) a vérifié que l'utilisateur du boîtier (8) était bien autorisé à le faire. Pour cela, le portail (12) lit les informations contenues sur la carte à puce (82) du boîtier (8) et vérifie que cet utilisateur est bien autorisé à regarder ce programme audiovisuel. Ce n'est qu'après cette vérification, que les coefficients de corrélation et les données associées sont envoyés depuis le tampon (123) vers le boîtier (8) correspondant à cet utilisateur via le réseau (10).

Dans l'exemple réalisé, l'utilisateur a fait en plus une copie privée de son programme audiovisuel. Le système de synthèse (87) a donc inscrit dans une partie (84) du disque dur (85) des données complémentaires ainsi que le numéro de la carte à puce (82) et l'information « copie privée » comme données associées à ce programme audiovisuel. Lors de la prochaine lecture privée de ce programme audiovisuel, le système de synthèse (87) analysera ces données associées et informera ainsi le portail (12) que l'usager du décodeur (8) fait une lecture de la copie privée. Si cette fonction est autorisée pour cet utilisateur (8) par le portail (12), les coefficients de corrélation et les données associées seront alors envoyées par le portail (12) vers le tampon (86) comme décrit ci-dessus. Dans le cas contraire, les coefficients de corrélation et les données associées ne seront pas envoyés et l'utilisateur du décodeur (8) ne pourra pas regarder le flux MPEG-4 reconstitué.

Décrivons maintenant en détail les différentes étapes pour le deuxième utilisateur (8).

Dans ce deuxième cas, le réseau de diffusion (4) est un réseau de satellites et le réseau de télécommunication (10) est un système de téléphonie cellulaire de faible bande passante de type GSM.

De façon identique à la description ci-dessus, l'utilisateur du décodeur (8) va recevoir les flux MPEG-4 et les données complémentaires depuis le portail (12).

Par contre, dans l'exemple réalisé, au lieu de modifier chaque plan I-VOP, le système d'analyse (121) ne prend qu'un plan I-VOP sur n où n est un nombre aléatoire compris entre 1 et 12 et prend en compte des plans P-VOP.

Ainsi, avant l'envoi du flux MPEG-4 à partir du tampon de sortie (122), le système d'analyse (121) va lire le flux d'entrée MPEG-4 (101) et après tirage du nombre aléatoire n, le système de synthèse modifie les coefficients de corrélation au nième plan I-VOP du flux MPEG-4. Après chaque plan I-VOP ainsi modifié, le système d'analyse (121) va faire un nouveau tirage d'un nombre n aléatoire. Chaque nombre aléatoire ainsi utilisé est enregistré dans le tampon (123) du portail (12). Pour les plans P-VOP, le système d'analyse (121) prend en compte un plan P-VOP sur m où m est un nombre aléatoire compris entre 1 et 5, dans une trame pour laquelle le plan I-VOP n'a pas été modifié.

Le système d'analyse (121) du portail (12) lit le flux entrant MPEG-4 (101) et, chaque fois qu'il détecte un n-ième plan I-VOP ou un m-ième plan P-VOP, il le décompose en macroblocs (aussi en tranches - slices), puis en blocs. Cette analyse lui permet de reconnaître dans le code les coefficients DC, et de substituer certains d'entre eux par des valeurs aléatoires, afin de rendre les plans (et par conséquent la séquence) illisibles du point de vue visuel humain. Les vraies valeurs des coefficients DC seront stockées dans le tampon de sortie (123), qui permettra plus tard la reconstitution de la séquence de départ dans le boîtier (8), en suivant le schéma inverse.

De plus, dans ce deuxième exemple réalisé, tous les coefficients DC de ce nième plan I-VOP ne seront pas modifiés. Seul un macrobloc sur deux comporte un bloc (coefficient DC) modifié, tout en respectant l'égalité des fréquences de modification pour les six blocs d'un macrobloc. De plus, la substitution de chaque coefficient DC se fait par un coefficient DC calculé de façon aléatoire, mais sa valeur est comparée à la valeur du coefficient DC à substituer de façon à vérifier son écart.

Si cet écart est trop faible, un autre nombre aléatoire est calculé de façon à augmenter l'écart entre le coefficient à substituer et le coefficient de substitution.

Il en est de même pour les plans P-VOP.

Pour la reconstitution du flux MPEG-4, le décodeur (8) lit les tampons (86) et (87) et décode les éléments de données du train binaire, conformément à la syntaxe définie.

Lorsqu'il lit le train binaire, le décodeur identifie le début d'un plan codé, puis le type de plan. Il décode successivement chaque macrobloc du plan. Le type de macrobloc et les vecteurs mouvement sont utilisés pour construire une prédiction du macrobloc courant, basée sur des plans de référence antérieur et futur qui ont été stockés dans le décodeur. Les données des coefficients sont décodées et déquantifiées. Chaque bloc 8x8 de données de coefficients est transformé par une DCT inverse. Le résultat est ajouté au signal de prédiction, avec une dynamique définie. Avant d'envoyer le flux MPEG-4 au lecteur (81), le système de synthèse (8 7) remplace les coefficients DC des plans I-VOP et P-VOP qui ont été substitués par ceux du flux provenant du tampon (86).

Lors de la reconstitution du flux MPEG-4 par le système de synthèse (87) du décodeur (8), la lecture de ces nombres aléatoires et des coefficients de corrélation substitués depuis le tampon de sortie (123) du portail (12) et la lecture du flux MPEG-4 ainsi modifié depuis le disque dur (85) du boîtier (8) permettent au système de synthèse (87) de reconstituer les plans I-VOP et P-VOP et d'envoyer le tout au lecteur (81).

Le plan est reconstruit par le lecteur (81) quand tous ces macroblocs ont été traités. S'il s'agit d'un plan I-VOP ou d'un plan P-VOP, il constitue un plan de référence pour les plans subséquents et il est stocké à la place de l'ancien plan de référence. Dans l'exemple réalisé pour cet utilisateur, il a été constaté que le deuxième flux demandait une bande passante inférieure à un pour mille de la bande passante nécessaire pour transmettre le flux MPEG-4 de haute qualité, soit moins de un kilobits par seconde pour le deuxième flux vis-à-vis de un megabits par seconde pour le premier flux MPEG-4.

Décrivons maintenant en détail les différentes étapes pour ce troisième utilisateur.

Le portail (121) a choisi le flux MPEG (101) qu'il va devoir envoyer à l'utilisateur (8) pour être regardé en différé sur son écran de télévision (6). Cet utilisateur est relié à un réseau câblé numérique de diffusion (4) avec possibilité de vidéo à la demande (VOD), le réseau (10) est donc confondu avec le réseau (4). Le système d'analyse (121) du portail (12) va donc lire le flux entrant MPEG-4 (101) et, chaque fois qu'il détecte un plan I-VOP, il recherche le premier plan P-VOP qui suit ce plan I-VOP pour le remplacer par un plan P-VOP aléatoire qu'il a lui-même calculé. Le nouveau flux MPEG-4 modifié est alors enregistré dans le tampon de sortie (122) pour être diffusé sur le réseau de diffusion (4) à travers la liaison (5). Les plans P-VOP enlevés du flux MPEG-4 entrant (101) sont mémorisés dans le tampon (123) du portail (12).

Dans l'exemple réalisé, au lieu de substituer chaque plan P-VOP qui suit un plan I-VOP, le système d'analyse (12) ne prend qu'un plan I-VOP sur n où n est un nombre aléatoire compris entre 1 et 7. Lorsque le système d'analyse (121) inscrit le plan P-VOP substitué dans le tampon (123), il inscrit également le numéro du plan I-VOP qui précède ce plan P-VOP ainsi substitué. Le système d'analyse (121) continue son analyse jusqu'à la fin du flux d'entrée MPEG-4.

Pendant ce temps, et de façon totalement non synchronisée, le flux de sortie MPEG-4 modifié en provenance du tampon de sortie (122) du portail (12) est diffusé via le réseau large bande (4) vers un ou plusieurs utilisateurs (8).

Chaque boîtier décodeur (8) qui souhaite enregistrer ce flux MPEG-4 ainsi modifié peut alors lire ce flux MPEG-4 et l'enregistrer sur son disque dur (85). Cette initiative d'enregistrement est laissée au décodeur (8) sous le contrôle du portail (12). Pour cela, le système d'analyse (121) avait inscrit au début du flux MPEG, une information de données supplémentaires qui précisait les destinataires de ce flux MPEG modifié. Les destinataires peuvent être ainsi un destinataire (8) particulier, et lui seul, un groupe de destinataires (8) ou l'ensemble des décodeurs (8) reliés au réseau (4).

La phase décrite ci-dessus correspond à la première phase de préparation du flux MPEG par le portail (12), à sa transmission via le réseau large bande (4) et à son enregistrement dans un décodeur (8). Ce décodeur peut alors afficher ce flux MPEG enregistré dans son disque dur.

Pour cela, le système de synthèse (87) du décodeur (8) va lire le fichier MPEG depuis son disque dur (85) et va l'envoyer vers un lecteur classique MPEG (81). Si aucune donnée complémentaire n'est reçue par le système de synthèse (87), alors le flux MPEG qui parvient au lecteur (81) est traité et affiché tel quel, ce qui provoque une distorsion importante de l'affichage sur l'écran de visualisation (6). En effet, les plans P-VOP substitués qui sont traités par le système de synthèse (87) ne correspondent pas aux plans P-VOP qui sont nécessaires pour une visualisation correcte, puisque ces vrais plans P-VOP ont été substitués par des plans P-VOP aléatoires. Par contre, comme le flux enregistré est bien un flux de type MPEG, le lecteur standard (81) ne fait aucune différence et affiche les informations sur l'écran de sortie (6) qui apparaissent par contre totalement incohérentes à l'être humain qui regarde l'écran (6). Toute copie du flux MPEG en provenance du disque dur (85) du boîtier (8) produira le même effet visuel lors de sa restitution par un lecteur MPEG quelconque ; toute utilisation de cette copie qui serait mal intentionnée est donc vouée à l'échec.

Lorsque l'usager du décodeur (8) veut visualiser sur son écran (6) le audiovisuel programme enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG modifié en provenance du disque dur (85) via le tampon de lecture (83). Le système de synthèse (87) établit alors une liaison avec le portail (12) via le réseau de télécommunication (10) qui est dans notre exemple également le réseau câblé, mais qui aurait pu être un réseau téléphonique classique ou une liaison DSL.

Une fois cette liaison établie, et pendant toute la durée de visualisation du film ou du programme audiovisuel, le système de synthèse (87) fait parvenir de la mémoire tampon (123) du serveur (12) les plans P-VOP substitués et les données correspondant aux positions de ces plans P-VOP vis-à-vis des plans I-VOP du flux enregistré sur le disque dur (85). Ces plans P-VOP et ces données de position parviennent au système de synthèse (87) via la mémoire tampon d'entrée (86) et sont stockés temporairement dans la mémoire volatile (88) du système de synthèse (87). A partir du flux MPEG modifié qui parvient via le tampon (83), et à partir des plans P-VOP et des données associées qui parviennent via le tampon (86) dans la mémoire (88), le système de synthèse (87) reconstitue de façon inverse au processus d'analyse décrit précédemment les plans P-VOP substitués par les plans P-VOP réels, et envoie le nouveau flux MPEG ainsi reconstitué vers le lecteur (81) pour être affiché sur l'écran (6). Dès leur utilisation, les plans P-VOP à substituer et les données associées à ces plans P-VOP sont effacés de la mémoire volatile (88).

Dans l'exemple réalisé, avant que le portail (12) n'autorise l'envoi des images P et des données associées depuis son tampon (123), le portail (12) a vérifié que l'utilisateur du boîtier (8) était bien autorisé à le faire. Pour cela, le portail (12) lit les informations contenues sur la carte à puce (82) du boîtier (8) et/ou le numéro de série du boîtier (8) et vérifie que cet utilisateur est bien autorisé à regarder ce programme audiovisuel. Ce n'est qu'après cette vérification, que les plans P-VOP et les données associées ont été envoyés depuis le tampon (123) vers le boîtier (8) correspondant à cet utilisateur.

Dans l'exemple réalisé, l'utilisateur a également fait une copie privée de son programme audiovisuel. Le système de synthèse (87) a donc inscrit dans une partie (84) du disque dur (85) des données complémentaires ainsi que le numéro de la carte à puce (82) et/ou le numéro de série du boîtier (8) et l'information « copie privée » comme données associées à ce programme audiovisuel. Lors de la prochaine lecture de ce programme audiovisuel, le système de synthèse (87) analysera ces données associées et informera ainsi le portail (12) que l'usager du décodeur (8) fait une lecture de la copie privée. Si cette fonction est autorisée par le portail (12), les plans P-VOP et les données associées seront alors envoyés par le portail (12) vers le tampon (86) comme décrit ci-dessus. Dans le cas contraire, les données ne seront pas envoyées et l'utilisateur du décodeur (8) ne pourra pas regarder le flux MPEG reconstitué.

Dans un cas particulier de cet exemple réalisé, le réseau de diffusion (4) est un réseau de satellites et le réseau de télécommunication (10) est un système hertzien de type boucle locale radio (BLR).

De façon identique à la description ci-dessus, l'utilisateur du décodeur (8) va recevoir les flux MPEG et les données complémentaires depuis le portail (12). Par contre, avant l'envoi du flux MPEG à partir du tampon de sortie (122), le système d'analyse (121) va lire le flux d'entrée MPEG (101) et après tirage d'un nombre aléatoire n compris entre 1 et 4, le système de synthèse permute le nième plan P-VOP qui suit chaque plan I-VOP du flux MPEG avec le premier plan B-VOP qui suit ce plan P-VOP. Chaque nombre aléatoire ainsi utilisé est enregistré dans le tampon (123) du portail (12).

Lors de la reconstitution du flux MPEG par le système de synthèse (87) du décodeur (8), la lecture de ces nombres aléatoires depuis le portail (12) et la lecture du flux MPEG ainsi modifié depuis le disque dur (85) du boîtier (8) permettent au système de synthèse (87) de remettre les plans B-VOP et P-VOP dans le bon ordre et d'envoyer le tout au lecteur (81).

Décrivons maintenant en détail les différentes étapes pour la quatrième réalisation représentée par la figure 3.

Dans cette réalisation, le flux MPEG-4 est traité par le système d'analyse (12) de la même manière que le flux MPEG-4 de la deuxième réalisation.

Toutefois, le premier flux MPEG-4 modifié est inscrit et enregistré sur un support physique (20) de type CD à partir de la mémoire tampon de sortie du système d'analyse (12).

Le deuxième flux est mémorisé dans le tampon (123) et est également enregistré en plus sur un support physique (10bis) de format carte de crédit constitué par une carte à puce et une mémoire flash. Cette carte (10bis) sera lue par lecteur de carte (82) du dispositif (8). Le dispositif (8) est un système autonome, portable et mobile.

Dans la réalisation, le dispositif (8) comprend le système de synthèse (87), le lecteur standard MPEG-4 (81), les deux mémoires tampons (86) et (83) ainsi que le lecteur de disque (85).

Le dispositif (8) comprend en plus un écran intégré (6bis) de type écran plat qui permet à l'utilisateur de visionner directement ses programmes audiovisuels sur son dispositif (8) autonome.

Pour visualiser un programme audiovisuel de type MPEG-4, l'utilisateur du dispositif (8) introduit dans son lecteur de disque (85) un disque (20bis) de type (20) identique à celui enregistré par le système d'analyse (12).

Ce disque (20bis) contient ainsi un flux MPEG-4 de type premier Flux, c'est-à-dire avec les coefficients DC de certains plans I-VOP et/ou P-VOP substitués.

L'utilisateur du dispositif (8) peut donc visualiser ce flux MPEG-4 sur son écran (6bis) intégré à son dispositif. Toutefois, en raison de la substitution des coefficients DC, le flux MPEG-4 ne sera pas correct du point de vue visuel. Pour rendre le flux correct visuellement, l'utilisateur introduit dans le lecteur de carte à puce (82) la carte mémoire (10bis) contenant le deuxième flux avec les coefficients DC. Le système de synthèse reconstitue alors le flux MPEG-4 correct à partir du premier flux provenant du disque (20bis) et du deuxième flux provenant de la carte (10bis) connectée au lecteur (82).

Dans un agencement particulier, la carte à puce (10bis) contient également les applications et les algorithmes qui seront exécutés par le système de synthèse (87).

Dans un autre agencement particulier, la carte à puce (10bis) contient les données et les coefficients DC de plusieurs deuxième flux pour la reconstitution de plusieurs flux MPEG-4.

Dans un agencement particulier, le dispositif (8) comprend une liaison cellulaire vers un réseau GSM (10).

## Revendications

1. Procédé pour la distribution de séquences vidéos selon un format de flux nominal destiné à décrire une pluralité de scènes audiovisuelles, chaque scène étant constituée d'une pluralité d'objets audiovisuels hiérarchisés et d'un descripteur de ladite hiérarchie et des relations spatiales et temporelles entre lesdits objets, chaque objet vidéo comprenant au moins un plan numérique complet I-VOP, ledit plan I-VOP est décomposé en blocs et en macroblocs dépendant les uns des autres par des coefficients de corrélation, **caractérisé en ce que** l'on procède, avant la transmission à l'équipement client (8), à une analyse du flux pour générer un premier flux modifié, présentant le même format que le flux nominal, ledit flux modifié résultant de la modification desdits coefficients de corrélation **par des coefficients aléatoires de même nature** et un deuxième flux d'un format quelconque, comportant les informations numériques aptes à permettre la reconstruction desdits coefficients modifiés, puis à transmettre **le premier flux modifié par un réseau large** bande (4) depuis le serveur (1) vers l'équipement destinataire, **et à transmettre sur demande lors de la visualisation du flux nominal, le deuxième flux depuis le serveur vers l'équipement destinataire,** et **en ce que** l'on calcule sur l'équipement destinataire une synthèse d'un flux au format nominal en fonction dudit premier flux et dudit deuxième flux.

2. Procédé pour la distribution de séquences vidéos selon la revendication 1, **caractérisé en ce que** chaque objet vidéo comprend au moins un plan N-VOP les données représentant ledit plan étant calculées en fonction des différences entre ledit plan N-VOP et au moins un autre plan.

3. Procédé pour la distribution de séquences vidéos selon la revendication 2, **caractérisé en ce que** ledit premier flux présente des plans N-VOP modifiés.

4. Procédé pour la distribution de séquences vidéos selon la revendication 2, **caractérisé en ce que** les données d'au moins un plan N-VOP sont calculées par compensation de mouvement dudit plan N-VOP par rapport au plan N-VOP ou I-VOP précédent. Le plan N-VOP est alors appelé plan P-VOP prédit.

5. Procédé pour la distribution de séquences vidéos selon l'une des revendications précédentes, **caractérisé en ce que** les données d'au moins un plan N-VOP sont calculées par compensation de mouvement dudit plan N-VOP par rapport aux plans P-VOP ou I-VOP précédent et suivant. Le plan N-VOP est alors appelé plan B-VOP bidirectionnel.

6. Procédé pour la distribution de séquences vidéos selon l'une des revendications précédentes, **caractérisé en ce que** le format de flux nominal est défini par la norme MPEG-4.

7. Procédé pour la distribution de séquences vidéos selon l'une des revendications 4 à 6 **caractérisé en ce que** ledit premier flux présente des plans P-VOP modifiés.

8. Procédé pour la distribution de séquences vidéos selon l'une des revendications 5 à 7, **caractérisé en ce que** ledit premier flux présente des plans B-VOP modifiés.

9. Procédé pour la distribution de séquences vidéos selon l'une des revendications précédentes, **caractérisé en ce que** ladite analyse décide des coefficients de corrélation à modifier en fonction de la taille voulue pour ledit deuxième flux et de la dégradation désirée pour ledit premier flux modifié.

10. Procédé pour la distribution de séquences vidéos selon la revendication 9, **caractérisé en ce qu'**au moins un plan P-VOP est modifié de la même façon que les plans I-VOP.

11. Procédé pour la distribution de séquences vidéos selon l'une des revendications précédentes, **caractérisé en ce que** ladite analyse décide des plans I-VOP, P-VOP et B-VOP à modifier en fonction de la taille voulue pour ledit deuxième flux et du niveau de dégradation désiré pour ledit premier flux modifié.

12. Procédé pour la distribution de séquences vidéos selon l'une des revendications précédentes, **caractérisé en ce que** la transmission dudit premier flux est réalisée à travers un support matériel distribué physiquement : CD-ROM, disque dur, carte à mémoire flash.

13. Procédé pour la distribution de séquences vidéos selon l'une des revendications 1 à 11, **caractérisé en ce que** la transmission dudit premier flux est réalisée à travers un réseau large bande câble, satellite, numérique hertzien, fibre optique, Digital Subscriber Line, boucle locale radio ou Digital Audio Broadcast.

14. Procédé pour la distribution de séquences vidéos selon l'une des revendications précédentes, **caractérisé en ce que** la transmission dudit deuxième flux est réalisée à travers un réseau téléphonique commuté RTC analogique ou numérique, ou à travers un réseau de type Digital Subscriber Line ou à travers un réseau boucle locale radio ou à travers un réseau téléphonique mobile utilisant les normes GSM, GPRS ou UMTS.

15. Procédé pour la distribution de séquences vidéos selon l'une des revendications 1 à 13, **caractérisé en ce que** la transmission dudit deuxième flux est réalisée à travers un support matériel distribué physiquement : carte à mémoire flash, carte à puce.

16. Procédé pour la distribution de séquences vidéos selon l'une des revendications 1 à 13, **caractérisé en ce que** la transmission dudit deuxième flux est réalisée à travers un réseau large bande de même type que le réseau utilisé par ledit premier flux.

17. Procédé pour la distribution de séquences vidéos selon l'une des revendications 1 à 13, **caractérisé en ce que** la transmission dudit deuxième flux est réalisée à travers le même réseau large bande que celui utilisé par ledit premier flux.

18. Procédé pour la distribution de séquences vidéos selon l'une des revendications précédentes, **caractérisé en ce que** la transmission d'au moins un des deux flux est chiffrée.

19. Procédé pour la distribution de séquences vidéos selon l'une des revendications précédentes **caractérisé en ce que** au moins un des deux flux est tatoué.

20. Procédé pour la distribution de séquences selon l'une des revendications précédentes, **caractérisé en ce que** les deux flux générés peuvent être destinés à un seul équipement, à un groupe d'équipements ou à tous les équipements.

21. Procédé pour la distribution de séquences vidéos selon l'une des revendications précédentes, **caractérisé en ce que** la reconstruction et/ou la visualisation est conditionnée par une transaction.

22. Procédé pour la distribution de séquences vidéos selon l'une des revendications précédentes, **caractérisé en ce que** la reconstruction peut être autorisée pour une consultation d'une copie privée demandée par le client.

23. Equipement pour la fabrication d'un flux vidéo en vue de la mise en oeuvre du procédé selon l'une des revendications précédentes, comportant au moins un serveur multimédia contenant les séquences vidéos originelles et **caractérisé en ce qu'**il comporte un dispositif d'analyse du flux vidéo provenant dudit serveur pour générer les deux flux.

24. Equipement pour la fabrication d'un flux vidéo selon la revendication 23, **caractérisé en ce qu'**il comporte une mémoire pour l'enregistrement d'un marqueur « copie privée » indiquant pour chaque séquence les droits de chaque utilisateur : copie privée pouvant être regardée un nombre illimité de fois, copie privée pouvant être regardée un nombre limité de fois et quel nombre, copie privée interdite.

25. Equipement pour l'exploitation d'un flux vidéo en vue de la mise en oeuvre du procédé selon l'une des revendications 1 à 22 comprenant un décodeur standard de flux, au moins une interface d'enregistrement destiné à stocker le contenu dudit premier flux et au moins une interface d'affichage **caractérisé en ce qu'**il comporte un moyen pour la recomposition du flux originel à partir des deux flux.

26. Equipement pour l'exploitation d'un flux vidéo selon la revendication 25, **caractérisé en ce que** ledit moyen est une application logicielle installée sur l'équipement.

27. Equipement pour l'exploitation d'un flux vidéo selon la revendication 25, **caractérisé en ce que** ledit moyen est une application logicielle installée sur une carte à puce.

28. Equipement pour l'exploitation d'un flux vidéo selon la revendication 25, **caractérisé en ce que** ledit moyen est un dispositif électronique.

29. Equipement pour l'exploitation d'un flux vidéo selon l'une des revendications 25 à 28, **caractérisé en ce que** dans le cas de l'installation sur un ordinateur, ledit moyen utilise une ressource spécifique au produit afin d'éviter la copie de l'information temporaire sur un support permanent.

30. Equipement pour l'exploitation d'un flux vidéo selon l'une des revendications 25 à 29, **caractérisé en ce que** ladite interface d'enregistrement stocke aussi un marqueur « copie privée » en relation avec ledit premier flux indiquant pour cette séquence les droits de l'utilisateur : copie privée pouvant être regardée un nombre illimité de fois, copie privée pouvant être regardée un nombre limité de fois et quel nombre, copie privée interdite.

31. Equipement pour l'exploitation d'un flux vidéo selon l'une des revendications 25 à 30, **caractérisé en ce qu'**il comprend un lecteur de cartes à puce permettant d'identifier le client quand il veut visualiser un programme audiovisuel enregistré sur son disque dur.

32. Equipement pour l'exploitation d'un flux vidéo selon l'une des revendications 25 à 31, **caractérisé en ce qu'**il comporte un premier moyen constitué par un ordinateur personnel équipé d'une interface de communication pour la réception d'un flux vidéo en provenance d'un réseau de communication ou d'un lecteur de support physique, et muni d'au moins un moyen d'enregistrement destiné à stocker le contenu dudit premier flux, et un second moyen constitué par un décodeur, comprenant une interface d'affichage, des moyens de communication avec ledit ordinateur principal pour recevoir ledit premier flux transmis par l'ordinateur et des moyens de communication pour recevoir ledit deuxième flux, ainsi qu'un moyen pour la recomposition du flux originel à partir des deux flux.

33. Equipement pour l'exploitation d'un flux vidéo selon la revendication 32, **caractérisé en ce que** ledit moyen pour la recomposition du flux est une application logicielle installée sur ledit décodeur seulement.

34. Equipement pour l'exploitation d'un flux vidéo selon la revendication 32, **caractérisé en ce que** ledit moyen pour la recomposition du flux est un dispositif électronique installé sur ledit décodeur seulement.

35. Système pour la transmission d'un flux vidéo selon l'une des revendications 23 à 24, **caractérisé en ce qu'**il comprend un équipement de fabrication d'un flux vidéo, au moins un équipement d'exploitation d'un flux vidéo selon l'une des revendications 25 à 34, et au moins un réseau de communication entre l'équipement de production et le(s) équipement(s) d'exploitation.

## Patentansprüche

1. Verfahren für die Verteilung von Videosequenzen nach einem Nennstromformat, das dazu bestimmt ist, eine Vielzahl von audiovisuellen Szenen zu beschreiben, wobei jede Szene aus einer Vielzahl von hierarchisierten audiovisuellen Objekten und aus einem Deskriptor der Hierarchie und der räumlichen und zeitlichen Beziehungen zwischen den Objekten besteht, wobei jedes Videoobjekt mindestens einen vollständigen I-VOP-Digitalplan umfasst, wobei der I-VOP-Plan in Blöcke und in Makroblöcke zerlegt ist, die über Korrelationskoeffizienten voneinander abhängen, **dadurch gekennzeichnet, dass** vor dem Übertragen an die Client-Ausrüstung (8) eine Analyse des Stroms vorgenommen wird, um einen ersten modifizierten Strom, der dasselbe Format aufweist wie der Nennstrom, wobei der modifizierte Strom aus der Modifikation der Korrelationskoeffizienten mit Zufallskoeffizienten derselben Art resultiert, und einen zweiten Strom eines beliebigen Formats zu erzeugen, der die digitalen Informationen umfasst, die dazu geeignet sind, die Rekonstruktion der modifizierten Koeffizienten zu ermöglichen, anschließend den ersten modifizierten Strom über ein Breitbandnetz (4) vom Server (1) zur Zielausrüstung zu übertragen, und auf Anfrage bei der Wiedergabe des Nennstroms den zweiten Strom vom Server zur Zielausrüstung zu übertragen, und dadurch, dass auf der Zielausrüstung eine Synthese eines Stroms im Nennformat in Abhängigkeit vom ersten Strom und dem zweiten Strom berechnet wird.

2. Verfahren für die Verteilung von Videosequenzen nach Anspruch 1, **dadurch gekennzeichnet, dass** jedes Videoobjekt mindestens einen N-VOP-Plan umfasst, wobei die Daten, die den Plan darstellen, in Abhängigkeit von den Differenzen zwischen dem N-VOP-Plan und mindestens einem weiteren Plan berechnet werden.

3. Verfahren für die Verteilung von Videosequenzen nach Anspruch 2, **dadurch gekennzeichnet, dass** der erste Strom modifizierte N-VOP-Pläne aufweist.

4. Verfahren für die Verteilung von Videosequenzen nach Anspruch 2, **dadurch gekennzeichnet, dass** die Daten von mindestens einem N-VOP-Plan durch Bewegungskompensation des N-VOP-Plans in Bezug auf den vorhergehenden N-VOP-oder I-VOP-Plan berechnet werden. Der N-VOP-Plan wird dann als vorhergesagter P-VOP-Plan bezeichnet.

5. Verfahren für die Verteilung von Videosequenzen nach einem der vorhergehenden Ansprüche, **dadurch gekennzeichnet, dass** die Daten von mindestens einem N-VOP-Plan durch Bewegungskompensation des N-VOP-Plans in Bezug auf den vorhergehenden und folgenden P-VOP- oder I-VOP-Plan berechnet werden. Der N-VOP-Plan wird dann als bidirektionaler B-VOP-Plan bezeichnet.

6. Verfahren für die Verteilung von Videosequenzen nach einem der vorhergehenden Ansprüche, **dadurch gekennzeichnet, dass** das Nennstromformat von der MPEG-4-Norm definiert wird.

7. Verfahren für die Verteilung von Videosequenzen nach einem der Ansprüche 4 bis 6, **dadurch gekennzeichnet, dass** der erste Strom modifizierte P-VOP-Pläne aufweist.

8. Verfahren für die Verteilung von Videosequenzen nach einem der Ansprüche 5 bis 7, **dadurch gekennzeichnet, dass** der erste Strom modifizierte B-VOP-Pläne aufweist.

9. Verfahren für die Verteilung von Videosequenzen nach einem der vorhergehenden Ansprüche, **dadurch gekennzeichnet, dass** die Analyse in Abhängigkeit von der für den zweiten Strom gewünschten Größe und der für den ersten modifizierten Strom gewünschten Beeinträchtigung über die Korrelationskoeffizienten entscheidet, die modifiziert werden sollen.

10. Verfahren für die Verteilung von Videosequenzen nach Anspruch 9, **dadurch gekennzeichnet, dass** mindestens ein P-VOP-Plan in derselben Art modifiziert wird wie die I-VOP-Pläne.

11. Verfahren für die Verteilung von Videosequenzen nach einem der vorhergehenden Ansprüche, **dadurch gekennzeichnet, dass** die Analyse in Abhängigkeit von der für den zweiten Strom gewünschten Größe und von dem für den ersten modifizierten Strom gewünschten Beeinträchtigungsgrad über die I-VOP-, P-VOP- und B-VOP-Pläne entscheidet, die modifiziert werden sollen.

12. Verfahren für die Verteilung von Videosequenzen nach einem der vorhergehenden Ansprüche, **dadurch gekennzeichnet, dass** die Übertragung des ersten Stroms über einen physisch verteilten materiellen Datenträger ausgeführt wird: CD-ROM, Festplatte, Flash-Speicherkarte.

13. Verfahren für die Verteilung von Videosequenzen nach einem der Ansprüche 1 bis 11, **dadurch gekennzeichnet, dass** die Übertragung des ersten Stroms über ein Kabel-, Satelliten-, digitales terrestrisches, Glasfaser-, Digital Subscriber Line-, Wireless Local Loop- oder Digital Audio Broadcast-Breitbandnetz ausgeführt wird.

14. Verfahren für die Verteilung von Videosequenzen nach einem der vorhergehenden Ansprüche, **dadurch gekennzeichnet, dass** die Übertragung des zweiten Stroms über ein analoges oder digitales PSTN-Telefonnetz, oder über ein Netz vom Typ Digital Subscriber Line oder über ein Wireless Local Loop-Netz oder über ein Mobiltelefonnetz unter Verwendung der Normen GSM, GPRS oder UMTS ausgeführt wird.

15. Verfahren für die Verteilung von Videosequenzen nach einem der Ansprüche 1 bis 13, **dadurch gekennzeichnet, dass** die Übertragung des zweiten Stroms über einen physisch verteilten materiellen Datenträger ausgeführt wird: Flash-Speicherkarte, Chipkarte.

16. Verfahren für die Verteilung von Videosequenzen nach einem der Ansprüche 1 bis 13, **dadurch gekennzeichnet, dass** die Übertragung des zweiten Stroms über ein Breitbandnetz desselben Typs ausgeführt wird wie des Netzes, das vom ersten Strom verwendet wird.

17. Verfahren für die Verteilung von Videosequenzen nach einem der Ansprüche 1 bis 13, **dadurch gekennzeichnet, dass** die Übertragung des zweiten Stroms über dasselbe Breitbandnetz ausgeführt wird wie jenes, das vom ersten Strom verwendet wird.

18. Verfahren für die Verteilung von Videosequenzen nach einem der vorhergehenden Ansprüche, **dadurch gekennzeichnet, dass** die Übertragung von mindestens einem der zwei Ströme verschlüsselt ist.

19. Verfahren für die Verteilung von Videosequenzen nach einem der vorhergehenden Ansprüche, **dadurch gekennzeichnet, dass** mindestens einer der zwei Ströme geprägt ist.

20. Verfahren für die Verteilung von Sequenzen nach einem der vorhergehenden Ansprüche, **dadurch gekennzeichnet, dass** die zwei erzeugten Ströme für eine einzige Ausrüstung, für eine Gruppe von Ausrüstungen oder für alle die Ausrüstungen bestimmt sein können.

21. Verfahren für die Verteilung von Videosequenzen nach einem der vorhergehenden Ansprüche, **dadurch gekennzeichnet, dass** die Rekonstruktion und/oder die Wiedergabe von einer Transaktion bedingt wird.

22. Verfahren für die Verteilung von Videosequenzen nach einem der vorhergehenden Ansprüche, **dadurch gekennzeichnet, dass** die Rekonstruktion für eine Einsicht einer Privatkopie genehmigt werden kann, die vom Kunden angefragt wird.

23. Ausrüstung für die Herstellung eines Videostroms im Hinblick auf die Umsetzung des Verfahrens nach einem der vorhergehenden Ansprüche, die mindestens einen Multimedia-Server umfasst, der die ursprünglichen Videosequenzen enthält, und **dadurch gekennzeichnet, dass** sie eine Vorrichtung zur Analyse des vom Server stammenden Videostroms umfasst, um die zwei Ströme zu erzeugen.

24. Ausrüstung für die Herstellung eines Videostroms nach Anspruch 23, **dadurch gekennzeichnet, dass** sie einen Speicher für die Aufzeichnung eines "Privatkopie"-Markers umfasst, der für jede Sequenz die Rechte jedes Benutzers angibt: Privatkopie, die eine unbegrenzte Anzahl von Malen angesehen werden kann, Privatkopie, die eine begrenzte Anzahl von Malen angesehen werden kann, und welche Anzahl, verbotene Privatkopie.

25. Ausrüstung für die Nutzung eines Videostroms im Hinblick auf die Umsetzung des Verfahrens nach einem der Ansprüche 1 bis 22, die einen Standardstromdecodierer, mindestens eine Aufzeichnungsschnittstelle, die dazu bestimmt ist, den Inhalt des ersten Stroms zu speichern, und mindestens eine Anzeigeschnittstelle umfasst, **dadurch gekennzeichnet, dass** sie ein Mittel für das Wiederzusammensetzen des ursprünglichen Stroms auf Grundlage der zwei Ströme umfasst.

26. Ausrüstung für die Nutzung eines Videostroms nach Anspruch 25, **dadurch gekennzeichnet, dass** das Mittel eine Softwareanwendung ist, die auf der Ausrüstung installiert ist.

27. Ausrüstung für die Nutzung eines Videostroms nach Anspruch 25, **dadurch gekennzeichnet, dass** das Mittel eine Softwareanwendung ist, die auf einer Chipkarte installiert ist.

28. Ausrüstung für die Nutzung eines Videostroms nach Anspruch 25, **dadurch gekennzeichnet, dass** das Mittel eine elektronische Vorrichtung ist.

29. Ausrüstung für die Nutzung eines Videostroms nach einem der Ansprüche 25 bis 28, **dadurch gekennzeichnet, dass** das Mittel im Falle der Installation auf einem Computer eine für das Produkt spezifische Ressource verwendet, um die Kopie der temporären Informationen auf einen dauerhaften Datenträger zu verhindern.

30. Ausrüstung für die Nutzung eines Videostroms nach einem der Ansprüche 25 bis 29, **dadurch gekennzeichnet, dass** die Aufzeichnungsschnittstelle in Zusammenhang mit dem ersten Strom auch einen "Privatkopie"-Marker speichert, der für diese Sequenz die Rechte des Benutzers angibt: Privatkopie, die eine unbegrenzte Anzahl von Malen angesehen werden kann, Privatkopie, die eine begrenzte Anzahl von Malen angesehen werden kann, und welche Anzahl, verbotene Privatkopie.

31. Ausrüstung für die Nutzung eines Videostroms nach einem der Ansprüche 25 bis 30, **dadurch gekennzeichnet, dass** sie ein Chipkartenlesegerät umfasst, das es ermöglicht, den Kunden zu identifizieren, wenn er ein audiovisuelles Programm wiedergeben möchte, das auf seiner Festplatte aufgezeichnet ist.

32. Ausrüstung für die Nutzung eines Videostroms nach einem der Ansprüche 25 bis 31, **dadurch gekennzeichnet, dass** sie ein aus einem Personalcomputer bestehendes erstes Mittel, das mit einer Kommunikationsschnittstelle für den Empfang eines aus einem Kommunikationsnetz stammenden Videostroms oder mit einem Lesegerät für physische Datenträger ausgerüstet ist und mit mindestens einem Aufzeichnungsmittel ausgestattet ist, das dazu bestimmt ist, den Inhalt des ersten Stroms zu speichern, und ein aus einem Decodierer bestehendes zweites Mittel umfasst, das eine Anzeigeschnittstelle, Mittel zur Kommunikation mit dem Hauptcomputer, um den vom Computer übertragenen ersten Strom zu empfangen, und Kommunikationsmittel, um den zweiten Strom zu empfangen, sowie ein Mittel für das Wiederzusammensetzen des ursprünglichen Stroms auf Grundlage der zwei Ströme umfasst.

33. Ausrüstung für die Nutzung eines Videostroms nach Anspruch 32, **dadurch gekennzeichnet, dass** das Mittel für das Wiederzusammensetzen des Stroms eine Softwareanwendung ist, die nur auf dem Decodierer installiert ist.

34. Ausrüstung für die Nutzung eines Videostroms nach Anspruch 32, **dadurch gekennzeichnet, dass** das Mittel für das Wiederzusammensetzen des Stroms eine elektronische Vorrichtung ist, die nur auf dem Decodierer installiert ist.

35. System für die Übertragung eines Videostroms nach einem der Ansprüche 23 bis 24, **dadurch gekennzeichnet, dass** es eine Ausrüstung zur Herstellung eines Videostroms, mindestens eine Ausrüstung zur Nutzung eines Videostroms nach einem der Ansprüche 25 bis 34, und mindestens ein Kommunikationsnetz zwischen der Produktionsausrüstung und der/den Nutzungsausrüstung(en) umfasst.

## Claims

1. Method for the distribution of video sequences according to a nominal stream format intended to describe a plurality of audiovisual scenes, with each scene being comprised of a plurality of hierarchical audiovisual objects and from a descriptor of said hierarchy and of the spatial and temporal relations between said objects, with each video object comprising at least one I-VOP full digital plane, said I-VOP plane is broken down into blocks and macroblocks that depend on one another through correlation coefficients, **characterised in that**, before the transmission to the client equipment (8), an analysis of the stream is conducted in order to generate a first modified stream, having the same format as the nominal stream, said modified stream resulting from the modification of said correlation coefficients by random coefficients of the same nature and a second stream of any format, comprising the digital information adapted to allow for the reconstruction of said modified coefficients, then to transmit the first modified stream by a wide band network (4) from the server (1) to the destination equipment, and to transmit on-demand, during the viewing of the nominal stream, the second stream from the server to the destination equipment, and **in that** on the destination equipment a summary of a stream in nominal format is calculated according to said first stream and said second stream.

2. Method for the distribution of video sequences according to claim 1, **characterised in that** each video object comprises at least one N-VOP plane with the data representing said plane being calculated according to differences between said N-VOP plane and at least one other plane.

3. Method for the distribution of video sequences according to claim 2, **characterised in that** said first stream has modified N-VOP planes.

4. Method for the distribution of video sequences according to claim 2, **characterised in that** the data of at least one N-VOP plane is calculated by movement compensation of said N-VOP plane with respect to the preceding N-VOP or I-VOP plane. The N-VOP plane is then called predicted P-VOP plane.

5. Method for the distribution of video sequences according to one of the preceding claims, **characterised in that** the data of at least one N-VOP plane is calculated by movement compensation of said N-VOP plane with respect to the preceding and following P-VOP or I-VOP planes. The N-VOP plane is then called a bidirectional B-VOP plane.

6. Method for the distribution of video sequences according to one of the preceding claims, **characterised in that** the format of the nominal stream is defined by the MPEG-4 standard.

7. Method for the distribution of video sequences according to one of claims 4 to 6 **characterised in that** said first stream has modified P-VOP planes.

8. Method for the distribution of video sequences according to one of claims 5 to 7, **characterised in that** said first stream has modified B-VOP planes.

9. Method for the distribution of video sequences according to one of the preceding claims, **characterised in that** said analysis decides the correlation coefficients to be modified according to the desired size for said second stream and the desired degradation for said first modified stream.

10. Method for the distribution of video sequences according to claim 9, **characterised in that** at least one P-VOP plane is modified in the same way as the I-VOP planes.

11. Method for the distribution of video sequences according to one of the preceding claims, **characterised in that** said analysis decides the I-VOP, P-VOP and B-VOP planes to be modified according to the desired size for said second stream and the desired level of degradation for said first modified stream.

12. Method for the distribution of video sequences according to one of the preceding claims, **characterised in that** the transmission of said first stream is carried out through a physically distributed hardware support: CD-ROM, hard drive, flash memory card.

13. Method for the distribution of video sequences according to one of claims 1 to 11, **characterised in that** the transmission of said first stream is carried out through a wide band cable, satellite, digital terrestrial, fibre optic, Digital Subscriber Line, wireless local loop or Digital Audio Broadcast network.

14. Method for the distribution of video sequences according to one of the preceding claims, **characterised in that** the transmission of said second stream is carried out through an analogue or digital switched telephone network, STN, or through a network of the Digital Subscriber Line type or through a wireless local loop network or through a mobile telephone network using the GSM, GPRS or UMTS standards.

15. Method for the distribution of video sequences according to one of claims 1 to 13, **characterised in that** the transmission of said second stream is carried out through a physically distributed hardware support: flash memory card, chip card.

16. Method for the distribution of video sequences according to one of claims 1 to 13, **characterised in that** the transmission of said second stream is carried out through a wide band network of the same type as the network used by said first stream.

17. Method for the distribution of video sequences according to one of claims 1 to 13, **characterised in that** the transmission of said second stream is carried out through the same wide band network as the one used by said first stream.

18. Method for the distribution of video sequences according to one of the preceding claims, **characterised in that** the transmission of at least one of the two streams is encrypted.

19. Method for the distribution of video sequences according to one of the preceding claims **characterised in that** at least one of the two streams is tattooed.

20. Method for the distribution of sequences according to one of the preceding claims, **characterised in that** the two streams generated can be intended for a single piece of equipment, a group of pieces of equipment or to all of the equipment.

21. Method for the distribution of video sequences according to one of the preceding claims, **characterised in that** the reconstructing and/or the viewing is conditioned by a transaction.

22. Method for the distribution of video sequences according to one of the preceding claims, **characterised in that** the reconstructing can be authorised for a consultation of a private copy requested by the client.

23. Equipment for the production of a video stream for the purpose of implementing the method according to one of the preceding claims, comprising at least one multimedia server containing the original video sequences and **characterised in that** it comprises a device for analysing the video stream coming from said server in order to generate the two streams.

24. Equipment for the production of a video stream according to claim 23, **characterised in that** it comprises a memory for the recording of a "private copy" marker that indicates for each sequence the rights of each user: private copy able to be viewed an unlimited number of times, private copy able to be viewed a limited number of times and which number, prohibited private copy.

25. Equipment for using a video stream for the purpose of implementing the method according to one of claims 1 to 22 comprising a standard stream decoder, at least one recording interface intended to store the content of the first stream and at least one display interface **characterised in that** it comprises a means for reconstructing the original stream using the two streams.

26. Equipment for using a video stream according to claim 25, **characterised in that** said means is a software application installed on the equipment.

27. Equipment for using a video stream according to claim 25, **characterised in that** said means is a software application installed on a chip card.

28. Equipment for using a video stream according to claim 25, **characterised in that** said means is an electronic device.

29. Equipment for using a video stream according to one of claims 25 to 28, **characterised in that** in the case of installation on a computer, said means uses a resource specific to the product in order to prevent the temporary copying of the information onto a permanent support.

30. Equipment for using a video stream according to one of claims 25 to 29, **characterised in that** said recording interface also stores a "private copy" marker in relation with said first stream that indicates for this sequence the rights of the user: private copy able to be viewed an unlimited number of times, private copy able to be viewed a limited number of times and which number, prohibited private copy.

31. Equipment for using a video stream according to one of claims 25 to 30, **characterised in that** it comprises a chip card reader that makes it possible to identify the client when he wants to view an audiovisual programme recorded on its hard drive.

32. Equipment for using a video stream according to one of claims 25 to 31, **characterised in that** it comprises a first means comprised of a personal computer provided with a communication interface for the receiving of a video stream coming from a communication network or from a physical support reader, and provided with at least one means for recording intended to store the content of said first stream, and a second means comprised of a decoder, comprising a display interface, means for communicating with said main computer in order to receive said first stream transmitted by the computer and means for communicating in order to receive said second stream, as well as a means for reconstructing the original stream using the two streams.

33. Equipment for using a video stream according to claim 32, **characterised in that** said means for reconstructing the stream is a software application installed on said decoder only.

34. Equipment for using a video stream according to claim 32, **characterised in that** said means for reconstructing the stream is an electronic device installed on said decoder only.

35. System for the transmitting of a video stream according to one of claims 23 to 24, **characterised in that** it comprises a piece of equipment for producing a video stream, at least one piece of equipment for using a video stream according to one of claims 25 to 34, and at least one communication network between the production equipment and the piece(s) of operating equipment.
